# EUROPEAN PATENT SPECIFICATION

(11) **EP 0 797 801 B1**
(45) Date of publication and mention of the grant of the patent: **17.03.1999**
(21) Application number: 95944081.9
(22) Date of filing: 12.12.1995
(51) Int. Cl.: G06F 9/46

(54) **METHOD AND APPARATUS FOR PROVIDING SIMPLE, SECURE MANAGEMENT OF REMOTE SERVERS**
VERFAHREN UND VORRICHTUNG FÜR DIE EINFACHE UND SICHERE VERWALTUNG VON ENTFERNTEN SERVERN
TECHNIQUE ET APPAREILLAGE DE GESTION SIMPLE ET FIABLE DE SERVEURS DISTANTS

(30) Priority: 13.12.1994 US 355369
(43) Date of publication of application: 01.10.1997
(73) Proprietor: NOVELL, INC., Orem, UT 84057-2399 (US)
(72) Inventor: NICOLET, Jim, Elk Ridge, UT 84651 (US)
(74) Representative: Hanna, Peter William Derek
(86) International application number: PCT/US95/16043
(87) International publication number: WO 96/18948

(56) References cited:
- TECHNISCHE RUNDSCHAU, vol. 81, no. 19, 12 May 1989, BERN CH, pages 112-115, XP000110875 FRANZ-JOACHIM KAUFFELS: "Kommunikation im Rahmen von OS/2 (Teil II): Der LAN-Manager"
- HEWLETT-PACKARD JOURNAL, vol. 41, no. 2, April 1990, PALO ALTO US, pages 85-91, XP000116179 ATUL R. GARG AND LISA M. COLE: "Developing a Distributed Network Management Application Using HP OpenView Windows"
- IBM TECHNICAL DISCLOSURE BULLETIN, vol. 30, no. 3, August 1987, NEW YORK US, page 1407 XP002002813 "Method to Remotely Configure a Network Node from a Local Node"
- IBM TECHNICAL DISCLOSURE BULLETIN, vol. 34, no. 9, February 1992, NEW YORK US, pages 160-162, XP000300632 "Graphical User Interface for Managing Nodes in a Distributed System"
- IBM TECHNICAL DISCLOSURE BULLETIN, vol. 36, no. 3, March 1993, NEW YORK US, pages 421-425, XP000354831 "Remote Desktop Environments Reflected in Local Desktop Windows"
- D. GUPTA ET AL.: "Increasing System Availability through On-Line Software Version Chance", PROC. INTL. SYMP. ON FAULT TOLERANT COMPUTING, Toulouse, 22.06.93, vol. , no. , pages 30 to 35

## Description

### Background Art and Technical Problems

The present invention relates, generally, to methods and apparatus for controlling the configuration of a file server from a remote computer and, more particularly, to a method for reconfiguring a file server from a client computer in a client-server network operating environment.

Technological advances in microelectronics and digital computing systems have enabled the distribution of networking services across a wide range of computers participating in the network and over various communications media. Advances in distributing applications have also resulted in a client-server architecture for applications. Under a typical client-server architecture, the portions of an application which interact with the user are typically separated from the portions of the application that fulfill client process requests. Typically, the portions of an application that interact with the user are called a client or client software, whereas the portions of the application which service requests made by the client software are called a "server" or server software. However. a server could be running as a client to another server. In a network environment, the client and server are generally executed on different computers.

The management of server software running on a host computer, often referred to as a file server, poses several problems. Historically, if the server software needed to be unloaded, configured (or reloaded) the system administrator or other person responsible for administering network applications or the user of the client software was required to physically go to the server computer and use the server computer's input and display devices (e.g., a keyboard and monitor) to reload, configure or unload the server software. If client software needed to have access to a server that was not loaded or was otherwise improperly configured, the system administrator or user of the client software had to physically go to the server computer and load the desired software. If the client needed to interrogate the server computer to determine what server software was available, or interrogate the server computer to determine the devices supported by the server computer, the system administrator or user had to physically go to the server and inspect the processes running on the server or physically inspect the devices attached to the remote computer.

Previously, the management of remote computers has typically been based on one of two schemes. One scheme, known as the remote console or log in scheme, employs client software that uses a simple network protocol, such as a protocol that provides for the creation, distribution and delivery of digital packets. The client software runs at the "Network" level of the Open Systems Interconnect or "OSI" model. Corresponding server software interacts directly with the client software. Through this scheme, the client software accepts input from the local computer *(e.g.,* the client), sends the input to the remote server software which in turn passes the keystrokes directly to the server computer operating system. Given the nature of the scheme. that keystrokes entered on the local computer are passed over the network through the remote server software directly to the remote operating system, the only security that was employed was for access to the remote server application.

The second commonly used scheme uses the Simple Network Management Protocol ("SNMP"), and the Simple Management Protocol ("SMP"). Both are related and have the same historical roots. The scheme essentially defines two protocols for use in a heterogenous environment. The major focus of the scheme does not concentrate on how remote computers are managed but on how to handle the communication and interaction of heterogenous systems for management purposes. To date, the specification for this scheme consists of over 400 pages of documentation. Although this second scheme is useful in large heterogenous networks, the scheme fails to provide an elegant mechanism for client-server development of functionality to manage a specific remote network server over existing network protocols operating at the native session level, i.e., at the "Session" level of the OSI model.

Generally, all remote computers communicate in a network with other client computers by means of a network operating system that implements network communication using a native connection-based protocol running at the "transport" level of the OSI model ("native communications protocol"), such as Transmission Control Procedure ("TCP"), Server Message Block ("SMB"), or NetWare Core Protocol ("NCP"). (NetWare is a registered trademark of Novell Inc.) The developer of the network operating system provides a client that implements the native communications protocol on the local computer ("network client"), and an operating system that implements the native communications protocol on the remote computer. Developers writing client-server software for such network operating systems presently may either employ a remote console system and rely on the user of the client software to know how to interact with the remote computer, or employ a heterogenous network management protocol and develop the associate client-server applications to manage not only the local computer but various remote heterogeneous computers as well. Neither is satisfactory.

The remote console approach requires the user to know too much and lacks robust security. The heterogenous protocol requires the developer to do too much. The developer must implement the protocol, write the client and server applications and have access to the system internals of one or more of the remote operating systems in order to implement the necessary functionality. Thus, network administrators have needed a simple means of implementing remote management of networked computers, particularly for remote management of network servers in a client-server computing environment.

Gupta D. et al., in Proc. Intl. Symp. on Fault Tolerant Computing (FTCS), Toulouse, France, June 22 - 24, 1993, IEEE, pp 30 - 35, describes a modular approach for on-line version changes in software and a system for implementing this approach. It describes a method of, 1) creating a new process with the new version of the software, 2) monitoring the execution of the old program, 3) upon meeting certain conditions, effecting a change by transferring the state of the old process and control to the new process. The method was implemented on a single node system and its use in a distributed environment is also suggested. There is, however, no suggestion concerning its use or applicability in reconfiguring server side software from a client workstation.

In any case, the requirements of such reconfiguration are not limited to the replacement of existing software modules.

Kauffels F.J., (Kommunication im Rahmen von OS/2 (Teil II): Der LAN Manager, Technische Rundschau, Vol. 81, No 19, 12 May 1989, Bern, Switzerland, pp 112-115) describes the use of 0S/2 in a distributed environment and the possibility of making changes on a server from a client, in particular changing users' access rights or attributes using remote procedure calls (RPCs).

### Summary of the Invention

In accordance with one aspect of the present invention, a network operating system comprises a client software module resident in a client computer and a server software module resident on the server computer, which together permit the user to dynamically reconfigure the server computer from a remote, client computer terminal thereby avoiding the need for the user to physically go to the server computer to perform server control and reconfiguration functions.

In accordance with a preferred embodiment of the present invention, a method and apparatus for management of remote servers is provided in accordance with claims 1 and 14 which follow. A set of secure remote procedure calls is implemented in the network using the terms of the native communications protocol of the local (e.g., client) and remote (e.g., server) computers. The remote procedure calls allow client software to directly interact with the operating system of the remote computer so as to avoid the inherent problems of the currently available schemes. One or more remote procedure calls are incorporated into the network client and corresponding remote procedure calls are incorporated into the server operating system. Developers who then wish to develop client software with the ability to load, unload or otherwise configure their remote server applications may do so using a network client and server operating system supporting the calls.

HEWLETT- PACKARD JOURNAL, vol. 41, no. 2, April 1990, PALO ALTO US, pp. 85- 91, Atul R. Garg & Lisa M. Cole: "Developing a Distributed Network Management Application Using HP OpenView Windows", discloses a distributed network management application using message- based interprocess communication which provides facilities for user management and network topology file management. IBM TECHNICAL DISCLOSURE BULLETIN, vol. 30, no. 3, August 1987, NEW YORK US, p. 1407, "Method to Remotely Configure a Network Node from a Local Node", gives a brief disclosure concerning the remote configuration of a network node from a local node. The configuration procedure involves the modification of configuration option profiles from the remote node.

None of these prior art documents disclose or suggest the reconfiguration of server side software from a client workstation in accordance with the present invention as defined in the appended claims.

### Brief Description of the Drawing Figures

The present invention will hereinafter be described in conjunction with the appended drawings figures, wherein like numerals denote like elements, and:
Figure 1 is a schematic block diagram of an exemplary network in accordance with the present invention, showing a server computer and a plurality of client computers;
Figure 2 is a schematic diagram of an exemplary message packet constructed and transmitted in accordance with the present invention; and
Figures 3 are flow diagrams illustrating the operation an exemplary method in accordance with one aspect of the present invention.

### Detailed Description of Preferred Exemplary Embodiments

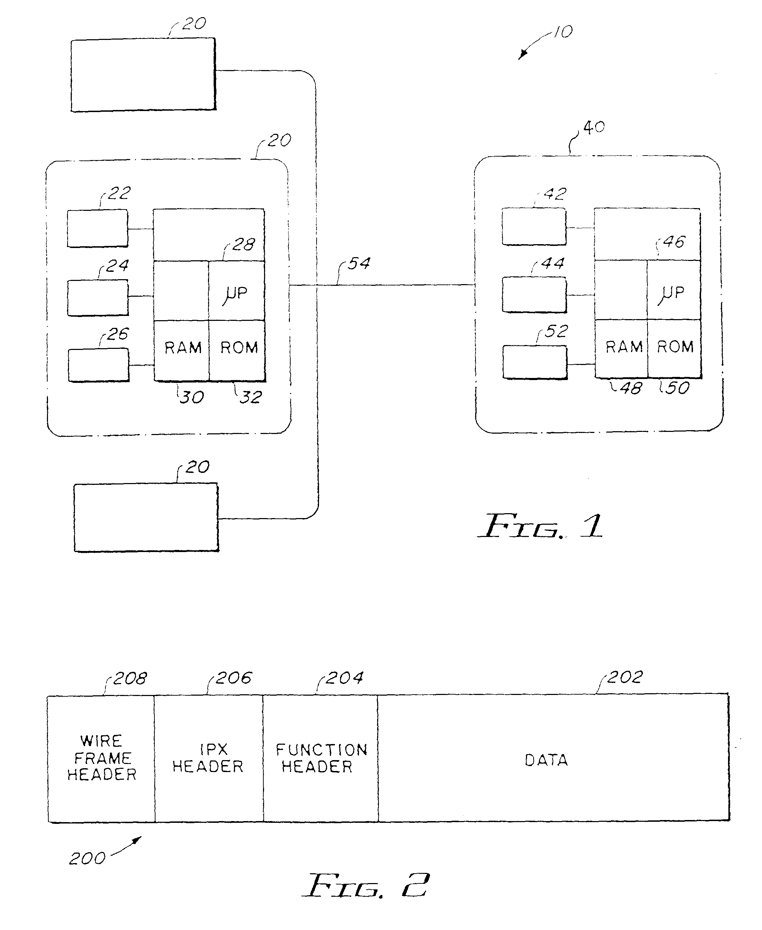

Referring now to Figure 1, an exemplary network 10 suitably comprises a plurality of computers, each having a unique "network address" associated therewith to facilitate communication among the various hardware nodes (*e.g*., computers) on the network. Although a typical network may include PCs, printers, servers, CD ROM drivers and various other appropriate hardware nodes, for simplicity only client and server computers are illustrated in Figure 1.

Network 10 suitably comprises one or more client computers 20 and one or more server computers 40 suitably interconnected in an appropriate network configuration by a network communications BUS 54. In accordance with a preferred exemplary embodiment, at least one of the client computers 20 comprises a keyboard 24 and monitor (*e.g.,* screen) 22 to permit user interaction with the client computer. Client computer 20 further comprises a disk drive 26, a client computer processor 28, RAM 30, and ROM 32, for example a conventional hard drive.

User access to a particular client computer 20 may be suitably controlled by various known security schemes, including the use of a user password having a level of security associated therewith which permits the user to access the various files stored in hard drive 32, and to also interface with server computer 40 in much the same way that the users of the various other client stations interact with server 40. In contrast, access to server computer 40 is suitably controlled through the use of a super-user password, which typically has associated therewith a level of security higher than that associated with each user password.

With continued reference to Figure 1, server computer 40 suitably comprises a keyboard 42, a monitor 44, a server disk drive 52, a server processor 46, a RAM 48, and one or more hard drives 50.

As depicted in the drawings, a preferred embodiment of the present invention may be suitably implemented in terms of several remote procedure calls, each designed to implement control functions at the server computer. Different remote procedure calls may be implemented to perform different tasks. Thus, a system administrator may easily perform the specified tasks from a remote location.

In one embodiment of the invention, remote procedure calls have been implemented for loading a remote process, unloading a remote process, mounting a remote volume, dismounting a remote volume, adding a name space to a volume, issuing set procedures to the remote operating system and executing a remote batch file. In the network client, code is implemented that creates packets conforming with the structure of the remote procedure calls in the server and in the form required by the underlying network communications protocol. For example, in a client-server environment supporting the NCP protocol, the client and server remote procedure calls advantageously comply with the general NCP packet structure.

Each verb of the NCP protocol suitably comprises a fixed packet header and a variable data block. Each verb has three fields and is known by a name and number. The name, such as "RPC Load an NLM" (which stands for "Remote Procedure Call to Load a NetWare Loadable Module") by itself is useful only for describing the task that the verb performs. The numbers associated with the three fields for the RPC Load an NM are suitably 0x2222, 131 and 01. The verb number (*e.g.,* all three fields) acts as a unique identifier for the verb. The initial field of the number identifies the service category. For example service oriented NCPs typically use 0x2222. The fixed packet header contains the type of request and other parameters necessary for the client and server to continue to communicate about a request, such as transaction sequence number, service connection number and task number.

### NCP Protocol Environment

Because an understanding of the underlying network communications protocol is helpful to implementing the invention, and given that various embodiments of the invention discussed herein implement the invention as a set of remote procedure calls in an NCP environment, a typical client - server request session for the invention is described. It will be understood, however, that the invention may also be implemented in other operating environments.

The session tracks the sequence of events from when the client software first requests the remote server operating system to load a remote process. Prior to making the request, the client must be connected and authenticated to the remote computer and the user making the request must have the appropriate level of security. The basic steps in one embodiment of the invention, called "RPC Load an NLM" in the NetWare Core Protocol environment, for remotely loading a server process (called an NLM or NetWare Loadable Module) may be generally described as follows:
1. The client software needing the services of a remote server software process issues a request to network client that also must be running in the local computer. The request is intercepted in the NetWare environment through a module in the local network client known as the NetWare shell.
2. The NetWare shell interprets the request as an NCP request and passes the request to another module of the network client capable of creating an NCP packet. The NCP packet creation module, namely NCP.VLM in the NetWare environment, creates the RPC Load an NLM verb and places it on the underlying transport.
3. The RPC Load an NLM request is then sent in the form of an NCP packet. The structure for the RPC Load an NLM verb is as provided in Table 1.
4. Each NCP packet begins with a small message header that carries general status information about the current state of the connection between the client and the server. The client request header is seven bytes long, while a server's reply header is eight bytes long. As shown in Table 1, the RequestType variable defines the type of network request. A type of 0x1111 is reserved for connection allocation services; a type of 0x2222 is reserved tor server request services: a type of 3333 is reserved for server responses; a type of 0x5555 is reserved for destroying connections; and a type of 0x9999 is reserved for work in progress responses.
5. The sequence number maintains a numeric counter for all incoming requests to provide reply prioritization. The ConnectionNumberLow and the ConnectionNumberHigh numbers identify a particular service connection between the client and the server. The TaskNumber distinguishes which client process or thread is making the request to the server.
6. In the NetWare environment the *SubFuncStrucLen* will be 21 plus the size of the PathAndName (ASCII) including the terminating nulls The NLMLoadOptions include options to load the server process in a processor ring such as ring 0, 1, 2 or 3. The PathAndName variable of the structure includes the path and file name in ASCII of the location of the server software to be executed in the format of {volume name:}{path\...}file name\0.
7. The server operating system responds to the "RPC Load an NLM" verb through the reply format provided in Table 2. In addition to the general message header information contained in the packet, the response packet includes the Completion Code, which will be 0 if the request was completed successfully or 251 if the server received an invalid subfunction request, namely one not matching the "RPC Load an NLM" verb structure.
8. The RPCcode contains information about the request to load the server process. If the server process was successfully loaded and executed, the RPCcode will contain a 0. If the server software module to be loaded in response to the request was not found or the name was not provided with the request, the server will retum an RPCcode value of 158.

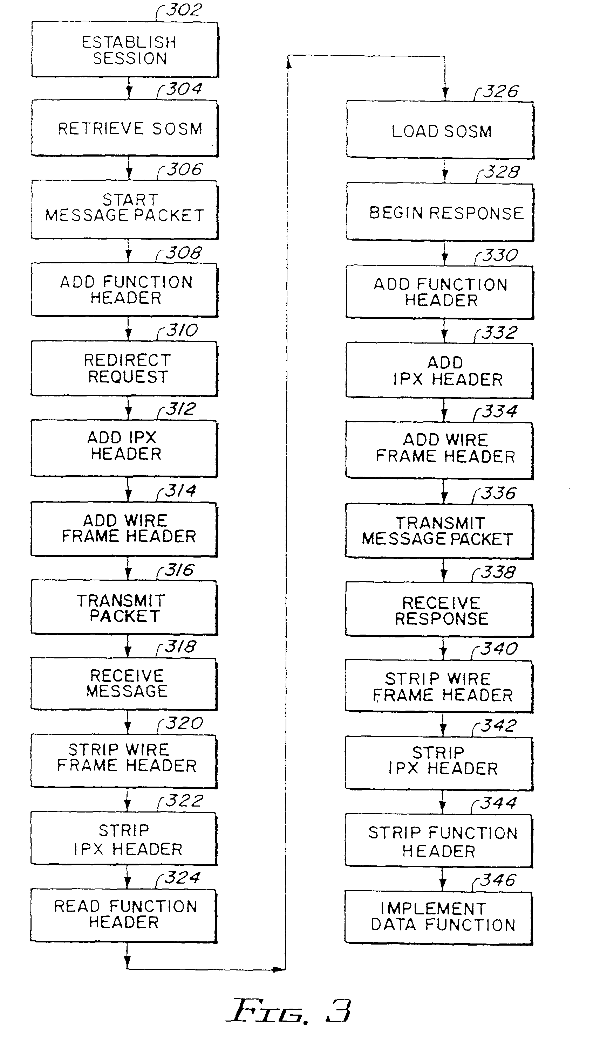

Referring now to Figures 2-3, an exemplary method for dynamically reconfiguring the server computer file server from a remote client terminal will now be described.

A user first establishes a session (step 302) by logging on to a client computer 20 associated with network 10 (see Figure 1). In this regard, a "session" on the network typically requires the user to enter a user password which enables the user to utilize client computer 20 and to access server computer 40 for those server functions resident on computer 40. When a user desires to reconfigure the server operating system, for example by loading a software module onto the operating system from the client computer, the client application begins a series of steps designed to reconfigure the server operating system, as desired.

In the context of the illustrated embodiment, the user may wish to add a software module to the server computer file server. In a NetWare environment employing NetWare protocols, the user may desire to add a Netware loadable module (NLM) to the server hard drive. In a more general context, the user may desire to add a server operating system module (SOSM) to the server hard drive. As a first step in implementing such a function, the client application retrieves an SOSM to be loaded onto the server (step 304). In this regard, the SOSM may be loaded from disk drive 26, retrieved from ROM 32, or any other suitable mechanism for allowing the client application to retrieve the SOSM.

With continued reference to Figures 2 and 3, the client software then begins constructing a message packet to be transmitted by the client computer to the server. When the server computer retrieves the message packet, the server computer loads the SOSM it received from the client computer onto the server computer's hard drive, as discussed in greater detail below. A first step in building such a message packet involves building the data portion 202 (step 306) of an exemplary message packet 200 (see Figure 2).

The server software then adds a function header 204 to the message packet (step 308). The function header suitably comprises indicia of instructions to the server computer regarding the function or functions to be performed by the server computer on the data portion 202 of the message packet (in this example, the SOSM being transmitted from the client computer to the server computer). In accordance with a preferred embodiment of the present invention, the function header 204 may be selected by the client software from a function library resident in the client software, *i.e,* a library of NCP headers each representing a predetermined processing function.

The client software thereafter issues a request to load the SOSM; in the context of the illustrated embodiment, however, this request is suitably "intercepted" by the NetWare shell or other suitable IPX interface (step 310), whereupon the client software adds an appropriate IPX header 206 (step 312) to message packet 200. In the illustrated embodiment, the IPX header may comprise indicia of the network address of the server computer to which the request is being directed by the client software.

Before placing the message on the network BUS, it may be desirable to add a wire frame header 208 to the message (step 314) to facilitate the transmission of the message packet from client to the server. In accordance with one aspect of the present invention, suitable wire frame header types may include IEEE 802.2, 802.3, and the like.

Referring now to Figure 3, once message packet 200 is fully constructed, client computer 20 suitably applies the message packet to network BUS 54 (step 316).

Upon receipt of message packet 200 by server computer 40 (step 318), the physical driver interface (not shown) associated with server computer 40 strips off wire frame header 208 (step 320). Server computer 40 then interrogates IPX header 206 to confirm that the message has properly reached its intended destination (*e.g*., server computer 40) and strips off IPX header 206 (step 322).

Server software resident in server computer 40 then interrogates NCP header field 204 to ascertain the task to be performed by server computer 40 on data 202 (step 324). In a typical server computer operating in a NetWare environment, function header 204 is suitably accessed and interpreted by the NCP interface associated with server computer 40. Upon determining the requested function, server computer 40 implements the desired function on data 202. In the context of the illustrated example, the requested function is to "load SOSM"; hence, server computer 40 suitably loads SOSM onto hard dive 50 in accordance with the server's operating system protocols (step 326).

Referring now to Figure 3, it may be desirable for server computer 40 to construct a response message to be transmitted back to client computer 20, for example to confirm that the SOSM was properly loaded, to inform the client software of the file name and/or address assigned to the SOSM by the server computer, and the like. As a first step in this process, the server software resident in server computer 40 begins building a response message (step 328); in the illustrated embodiment, the "data" portion 202 of such response message may included, for example, a message to the effect that the SOSM was property loaded SOSM, the address on the server's hard drive or the like.

The server software may then append a function header 204 to the message (step 330), for example a function header which identifies the nature of data 202; in this context, the function header may simply indicate that data portion 202 corresponds to a reply message. The server software thereafter appends an IPX header, for example indicative of the network address associated with client computer 20 (step 332), and thereafter adds an appropriate wire frame header 208 to the message (step 334). The server computer then suitably transmits the message packet on to the network wire (step 336). When the response message is received by the client computer (step 338) the physical driver interfaces (not shown) associated with the client computer receives the message packet and strips off wire frame header 208 (step 340). The redirector IPX interface associated with the client computer then receives the response message and strips off the IPX header (step 342), thus confirming that the response message has been received by the appropriate node on the network (e.g. client computer 20).

The NCP interface associated with the client computer then receives the function request and strips off function header 204 (step 344), whereupon the client software interprets the data. In the present case, data portion 202 of reply message 200 may comprise virtually any appropriate information in the context of the user amplication, for example a message to the user indicating that the SOSM has been properly loaded, the SOSM address on the server computer's hard drive, and the like. In this regard, it may also be desirable to utilize a function library such that the client software may interpret data field 202 and execute predetermined functions in accordance therewith, for example by displaying a message to the user, or facilitating access to the SOSM now resident on the server's hard drive by the client software (step 346).

Although the methodology set forth in Figures 3-6 describes the loading of an SOSM (e.g. an NLM) in the construction of a corresponding response message, it will be appreciated that the general scheme set forth in the attached drawing figures may be employed to control, reconfigure, manipulate, or otherwise access the server hard drive, operating system, or associated hardware devices from a remote client computer. Indeed, this may be accomplished without requiring the user at a client computer to utilize or even have knowledge of the system administrator's super password typically needed to gain access to the server computer operating system.

### Client Software Implementing the Invention

Developers may use the present invention to develop client software that interacts with the network client to issue the appropriate remote procedure calls, depending on the desired function of the client software. The following exemplary software programs exercise each of the remote procedure calls identified in the current embodiment.

### RPC Load an NLM

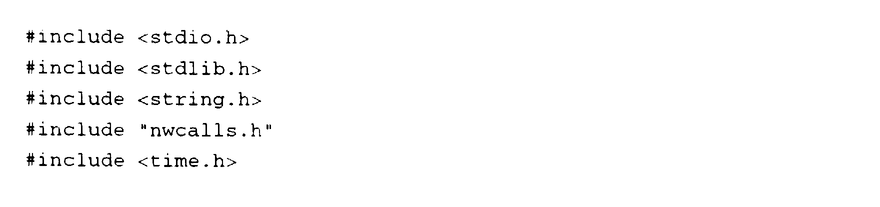

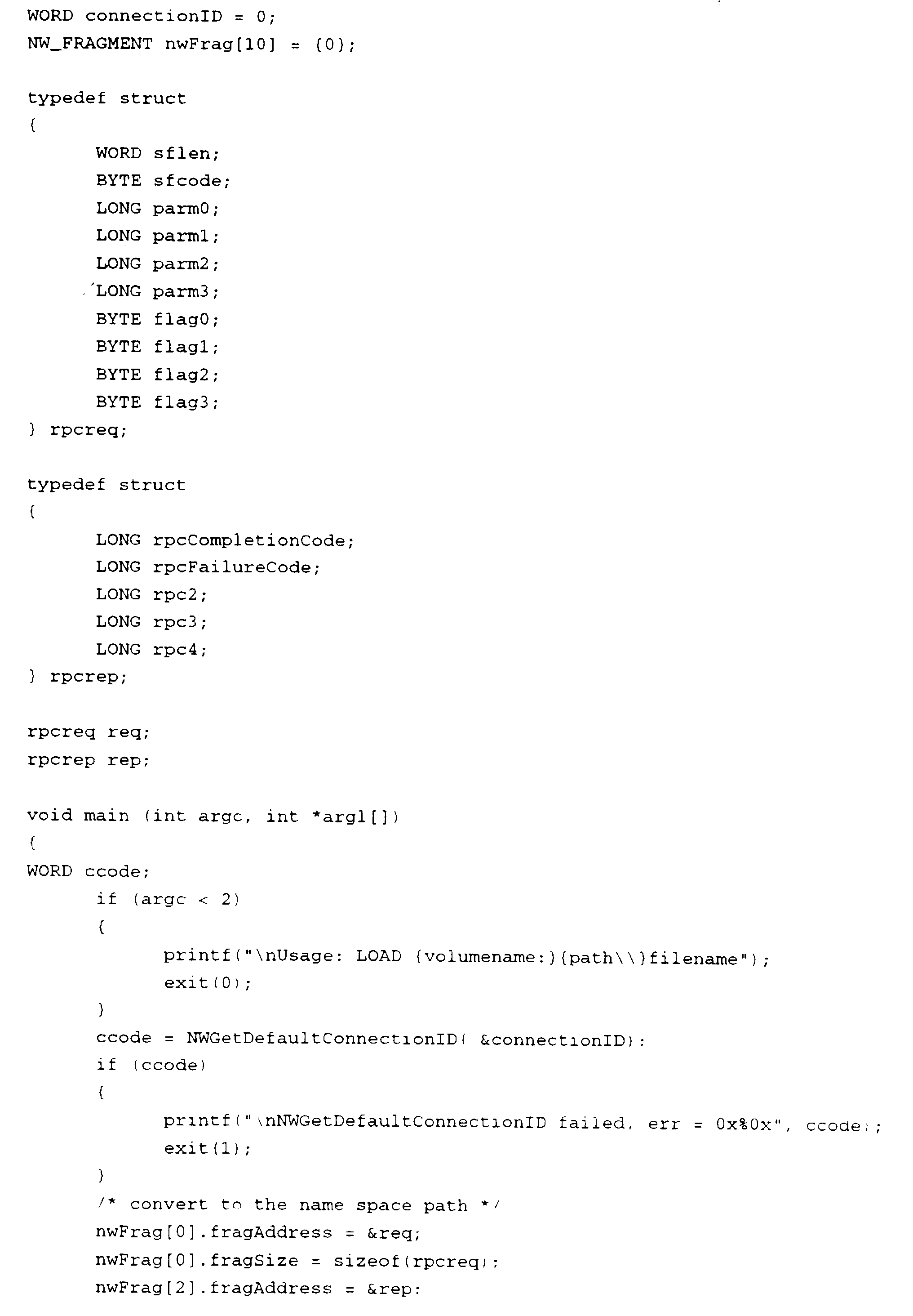

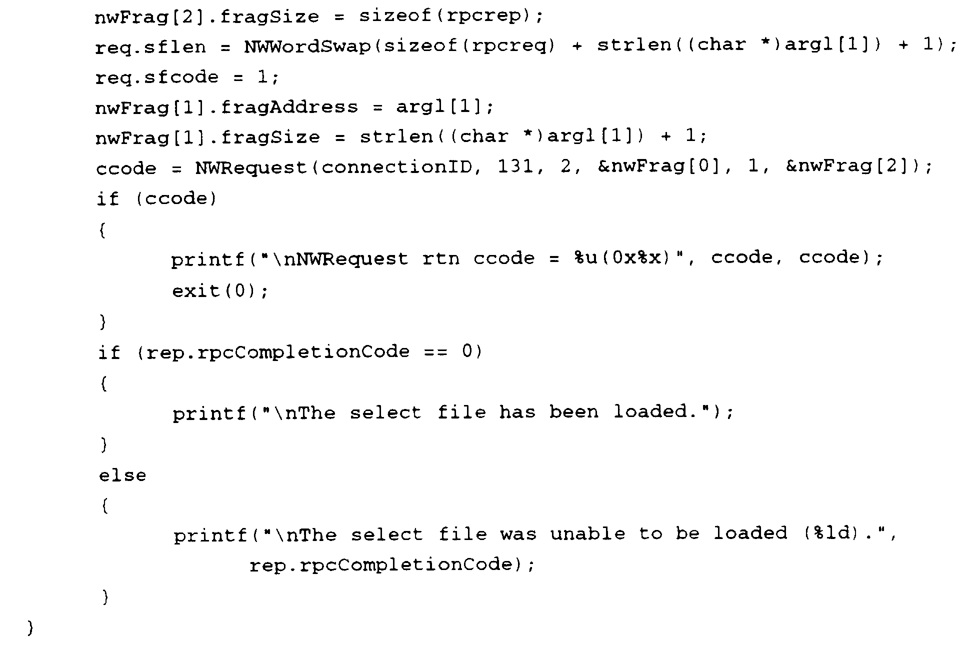

### RPC Unload an NLM

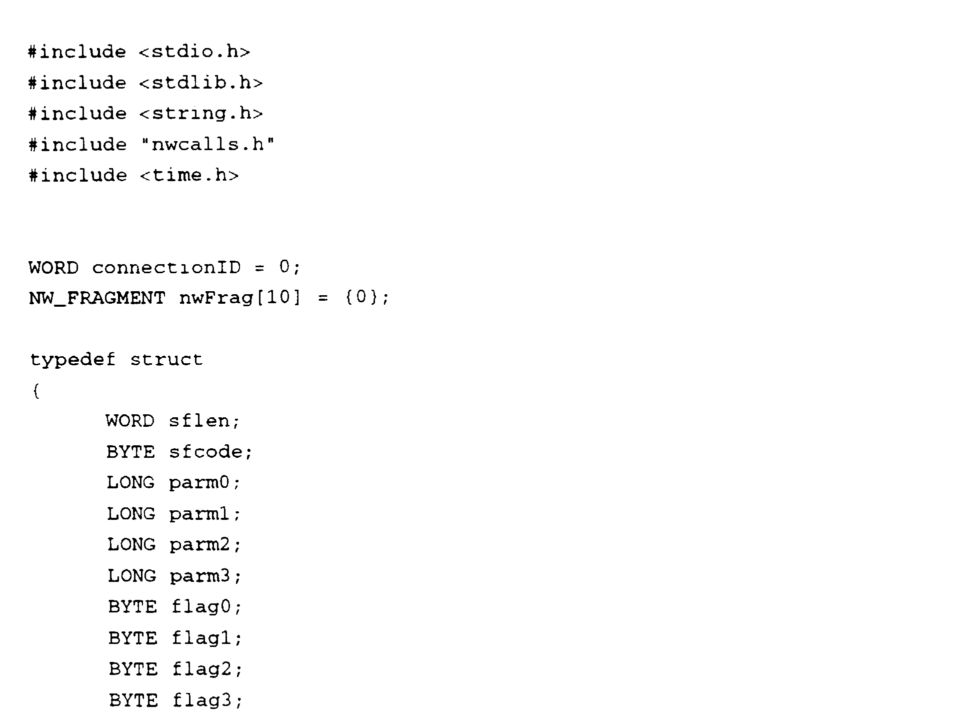

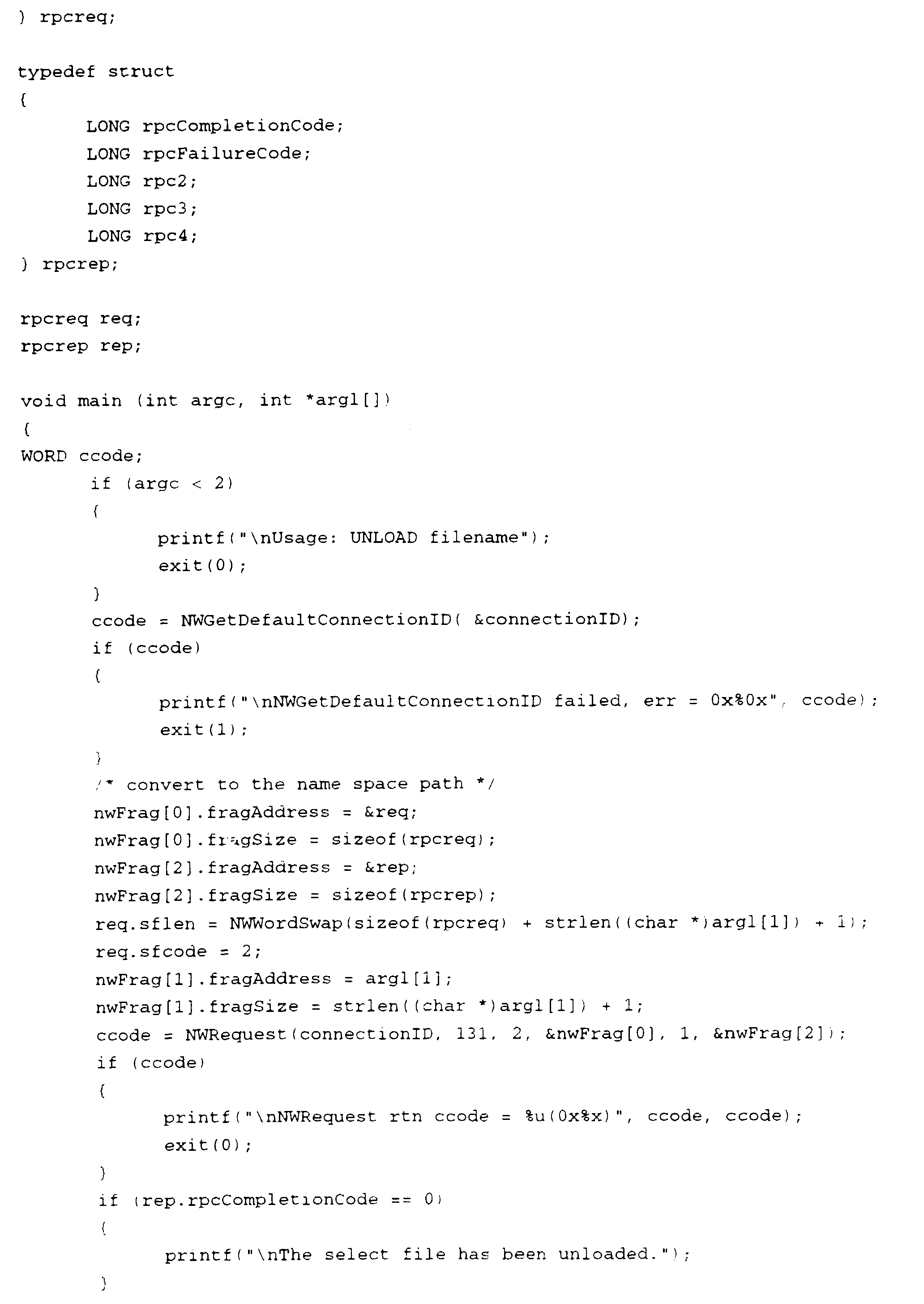

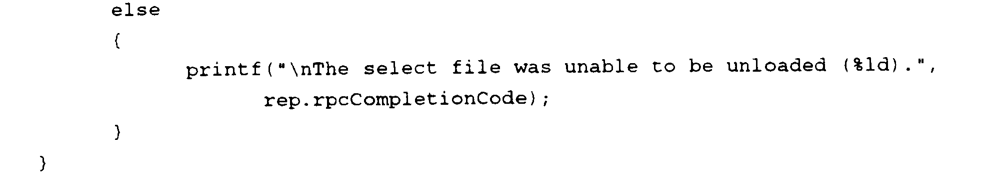

### RPC Mount Volume

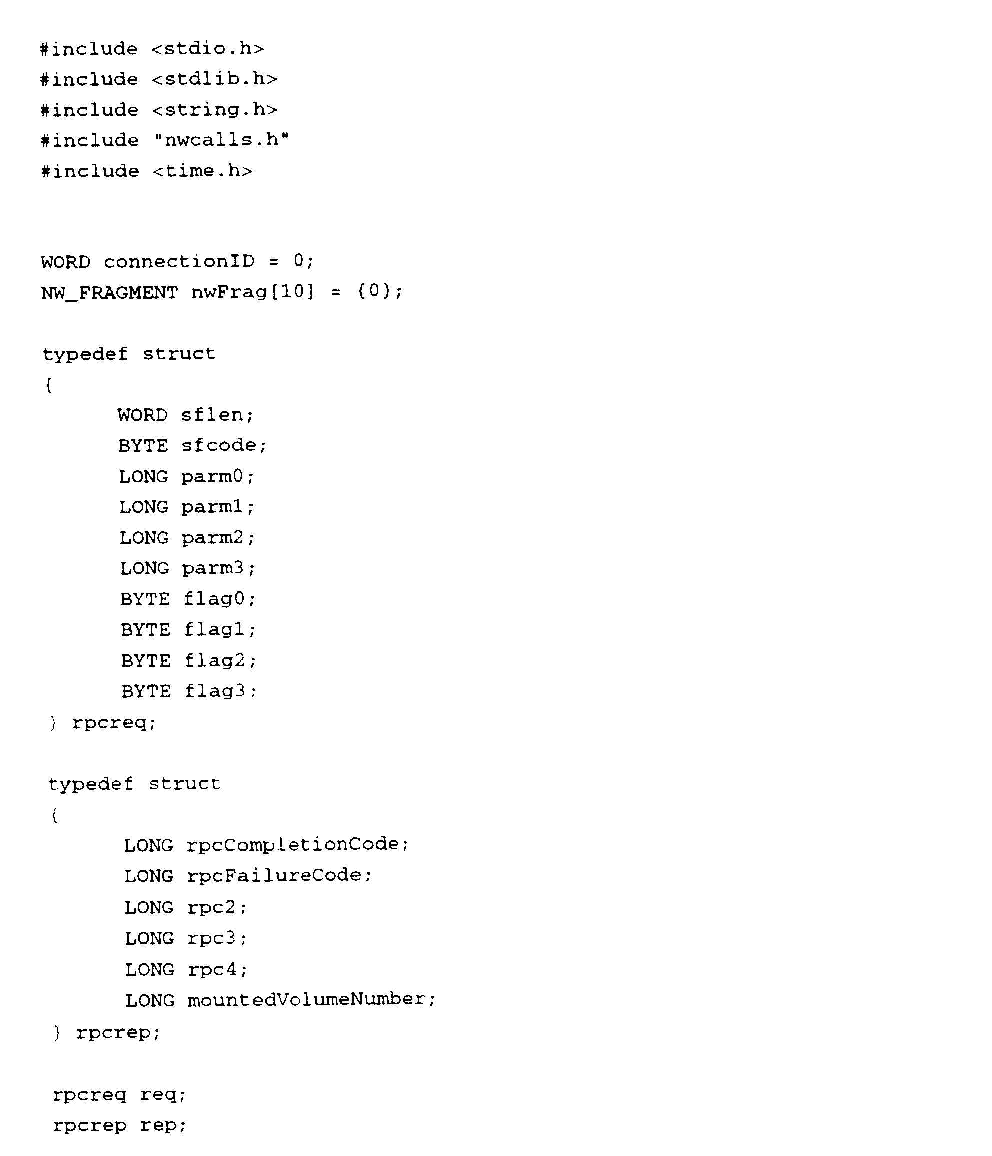

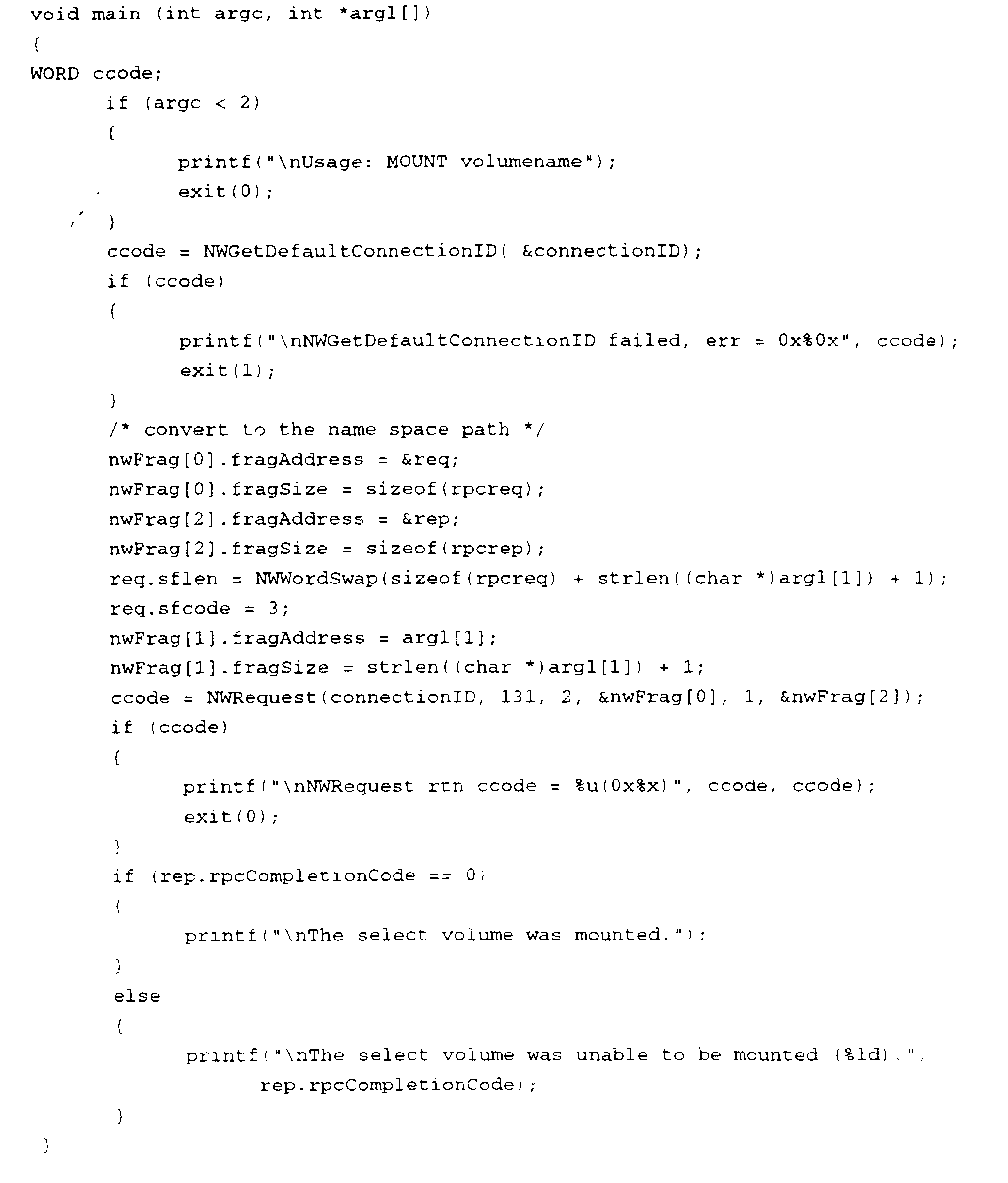

### RPC Dismount Volume

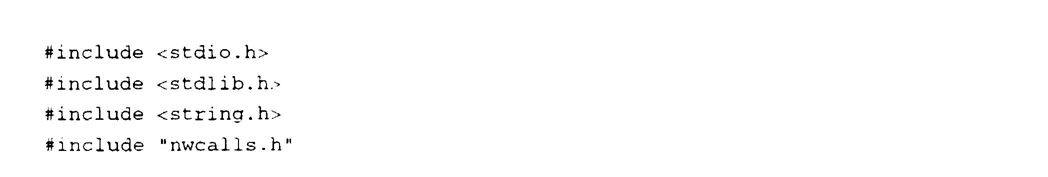

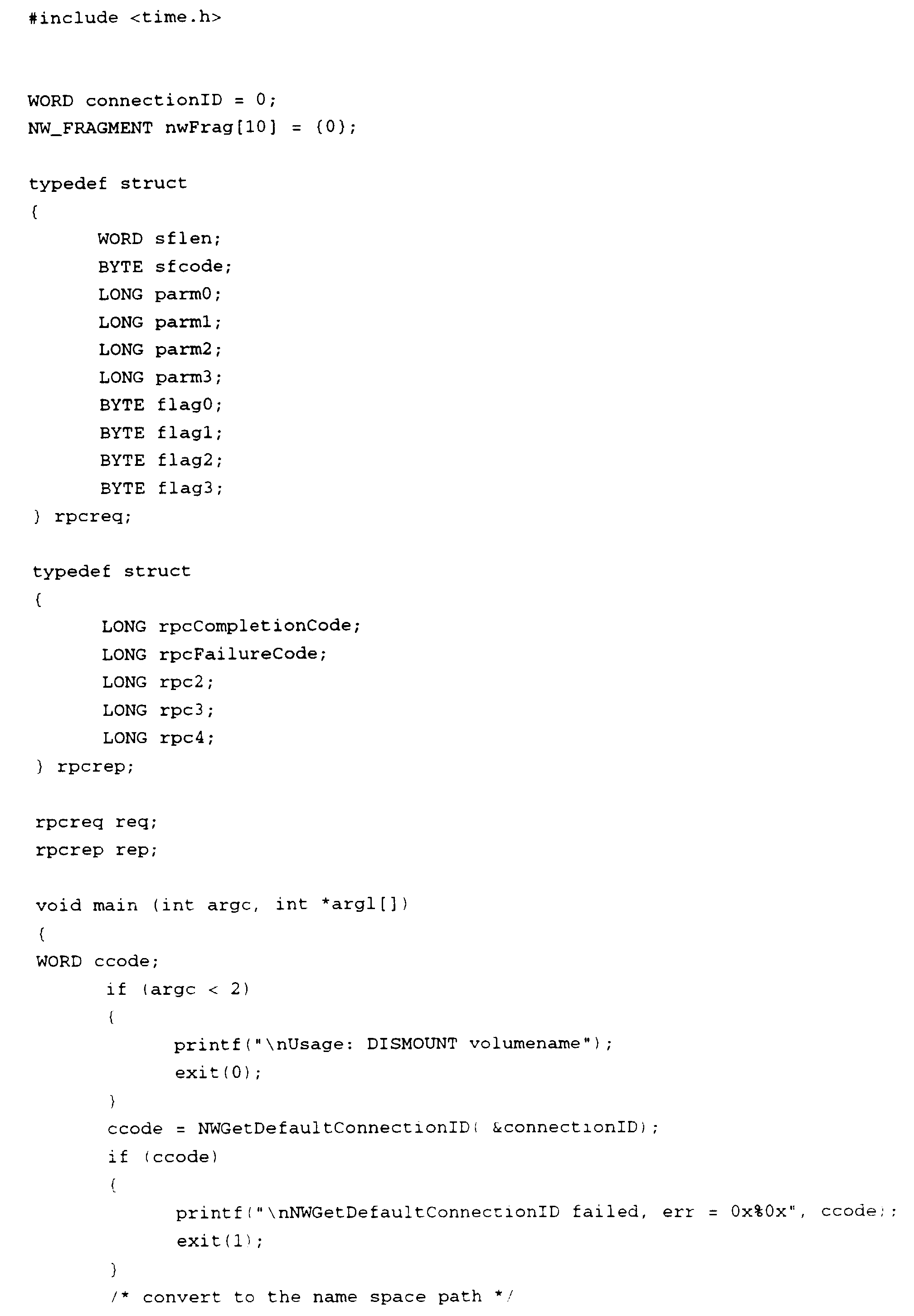

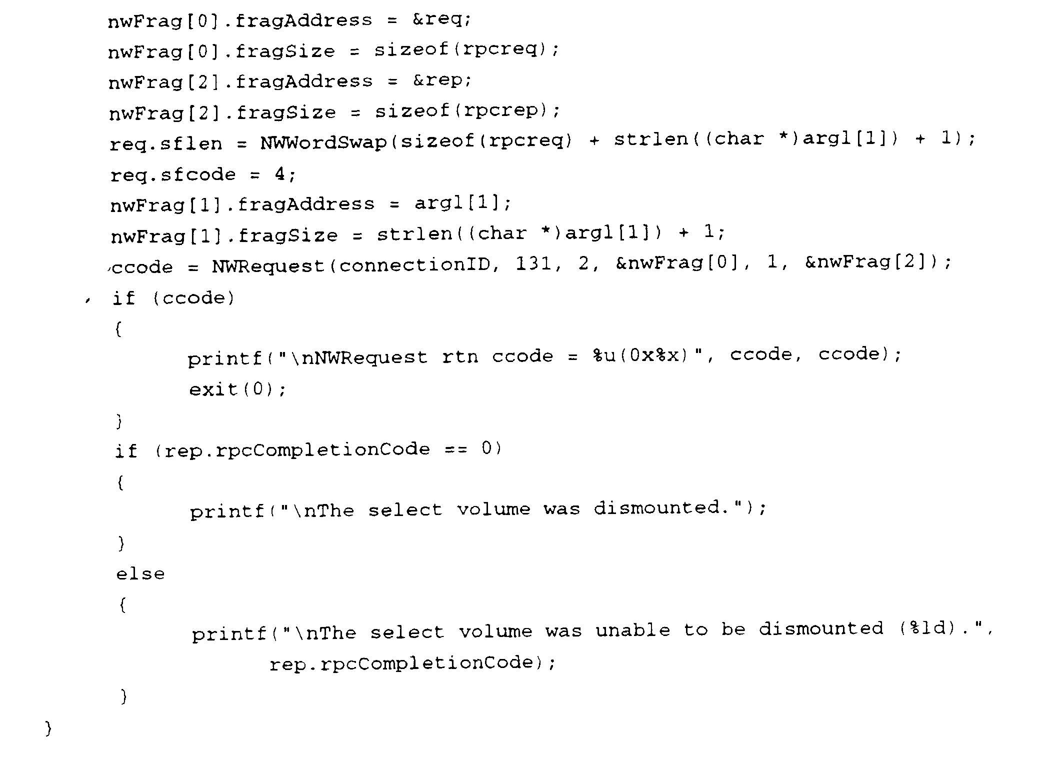

### RPC Set Set Command Value

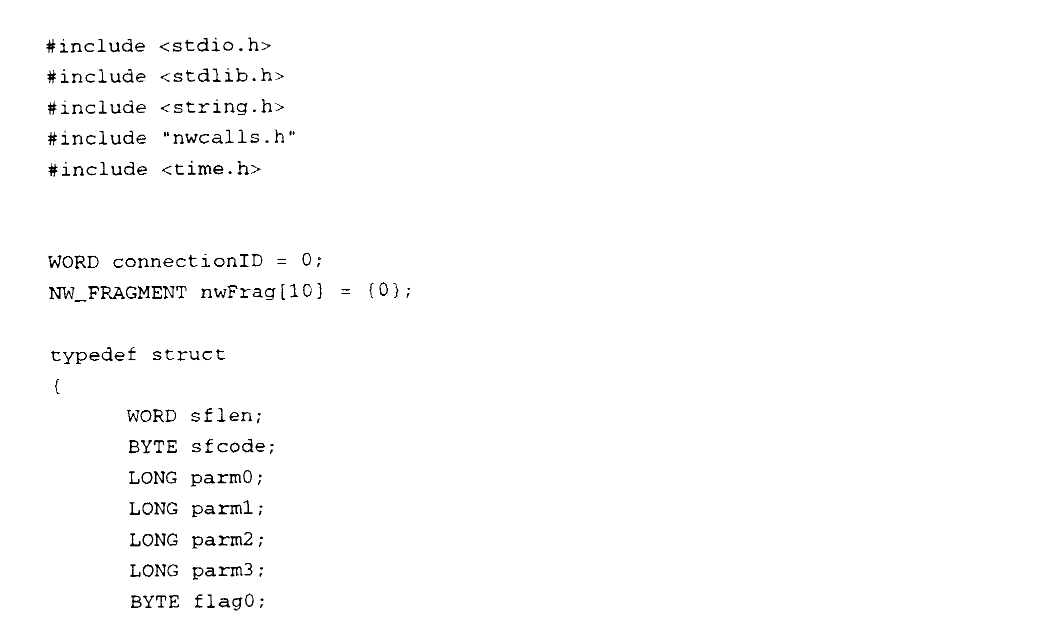

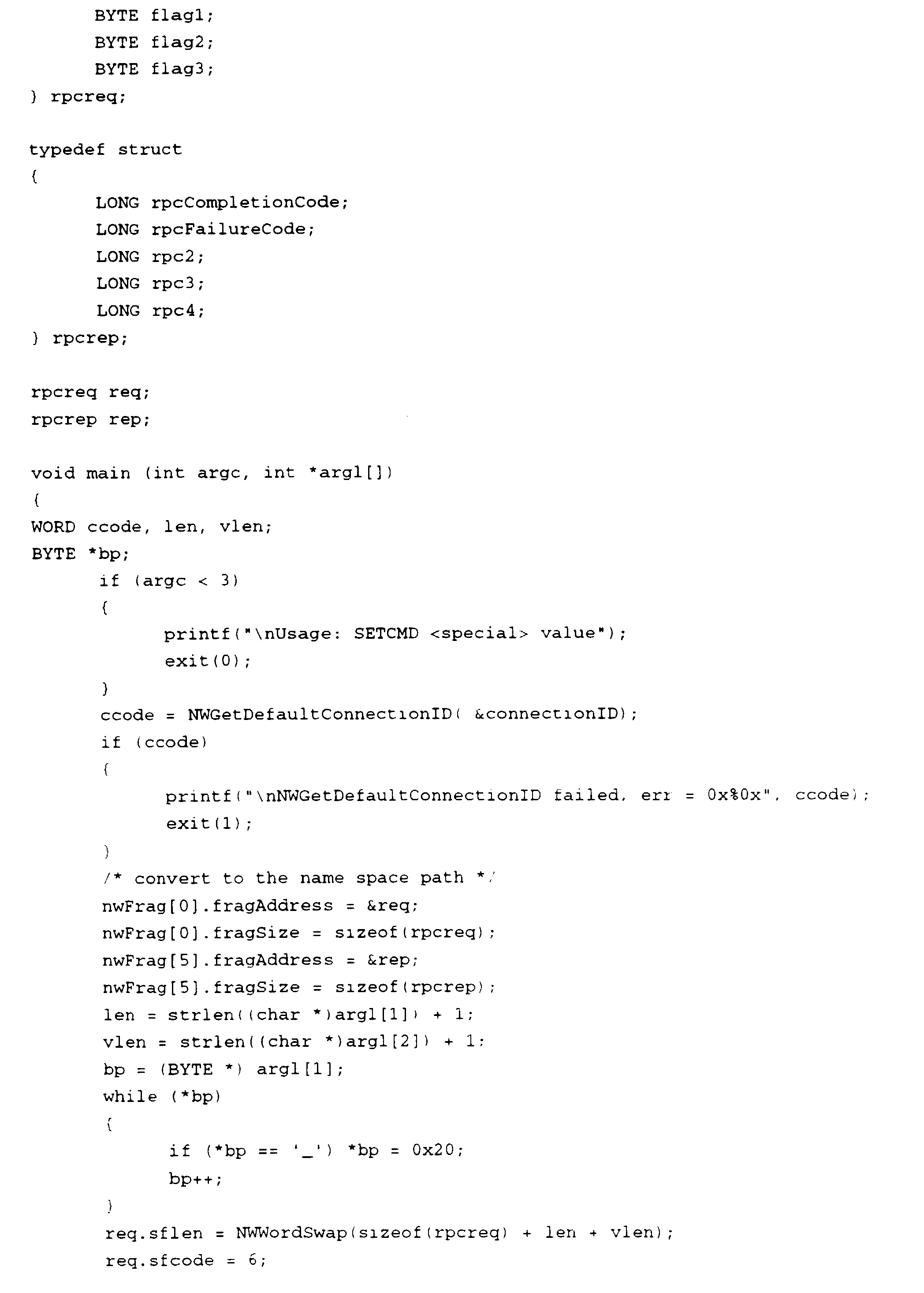

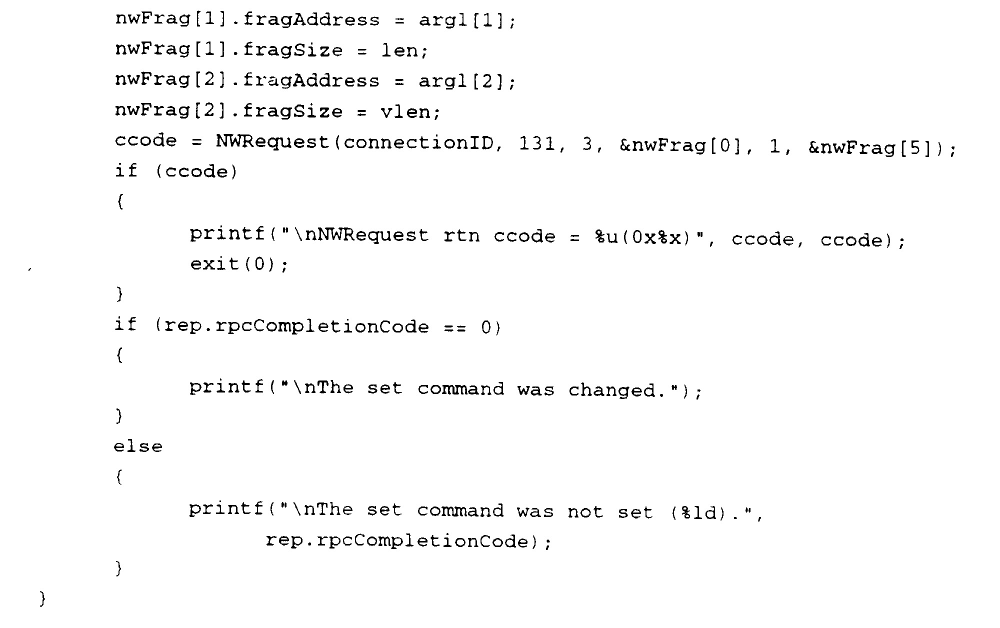

### RPC Execute NCF File

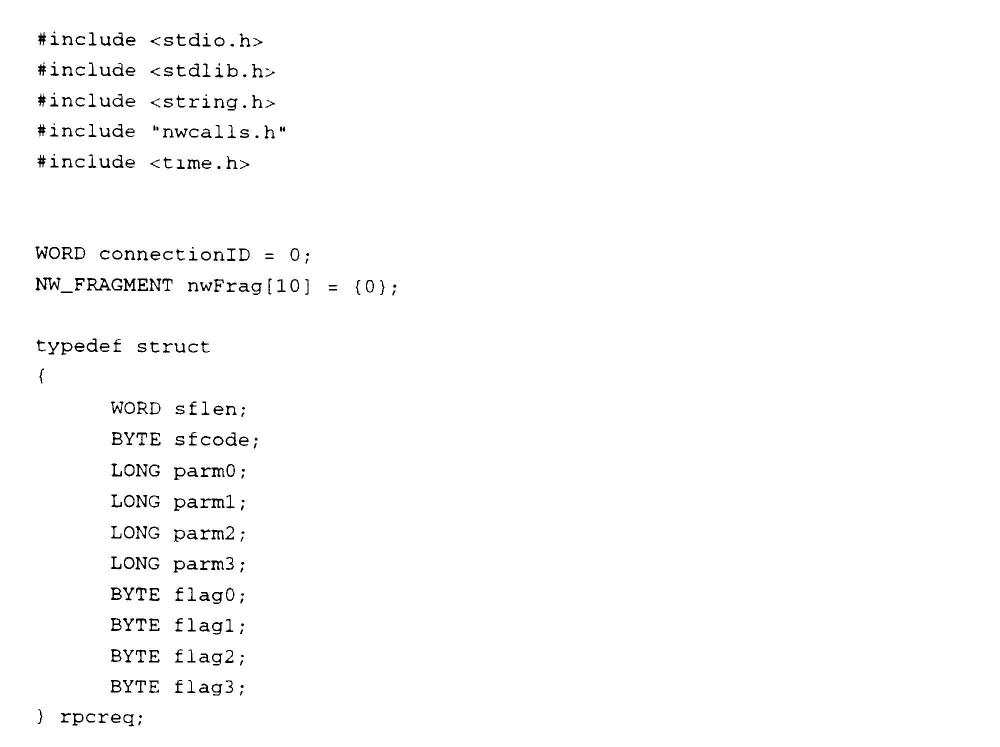

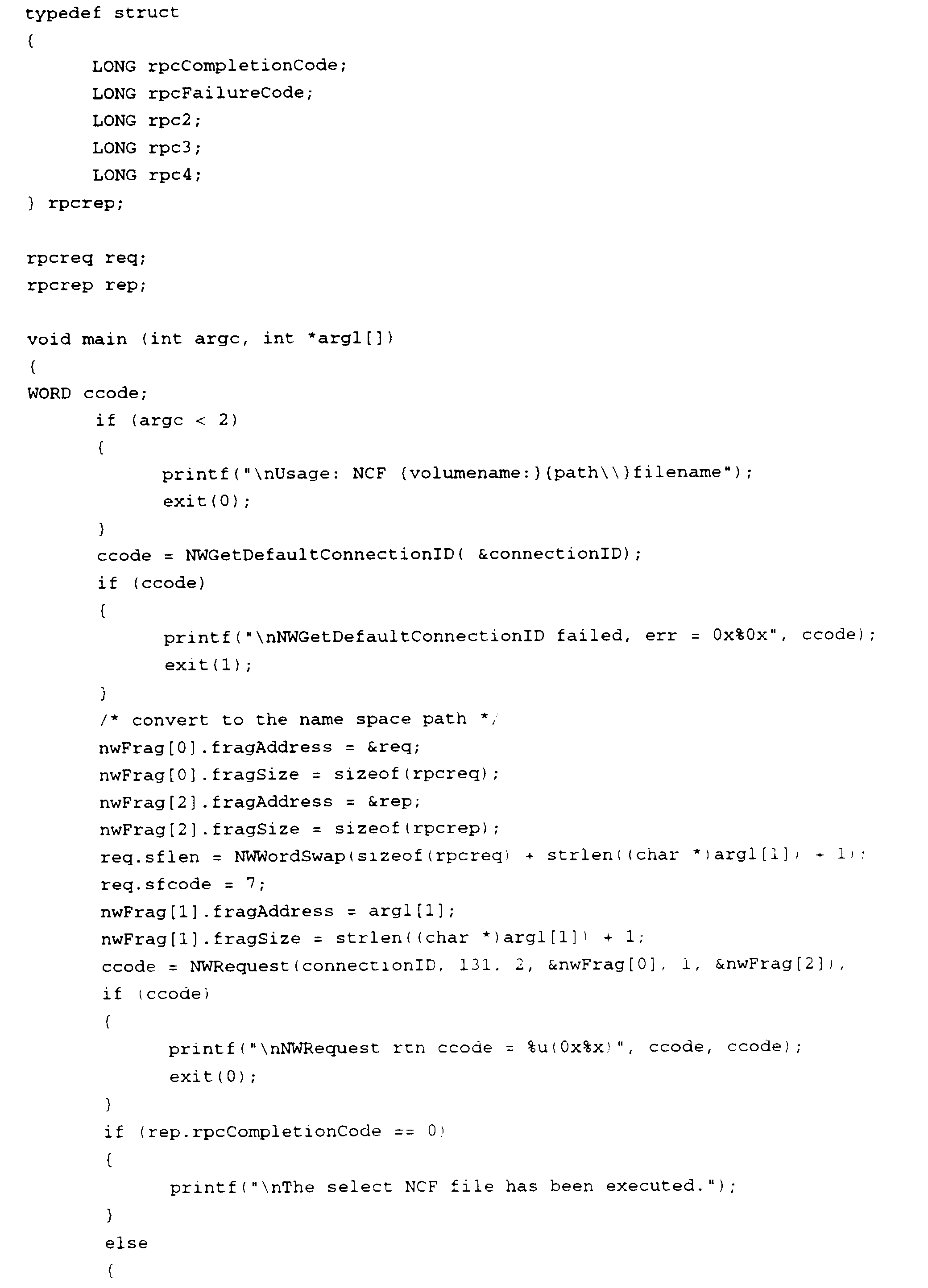

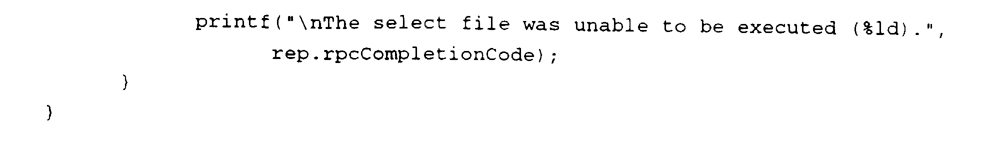

### RPC Ad Name Space to Volume

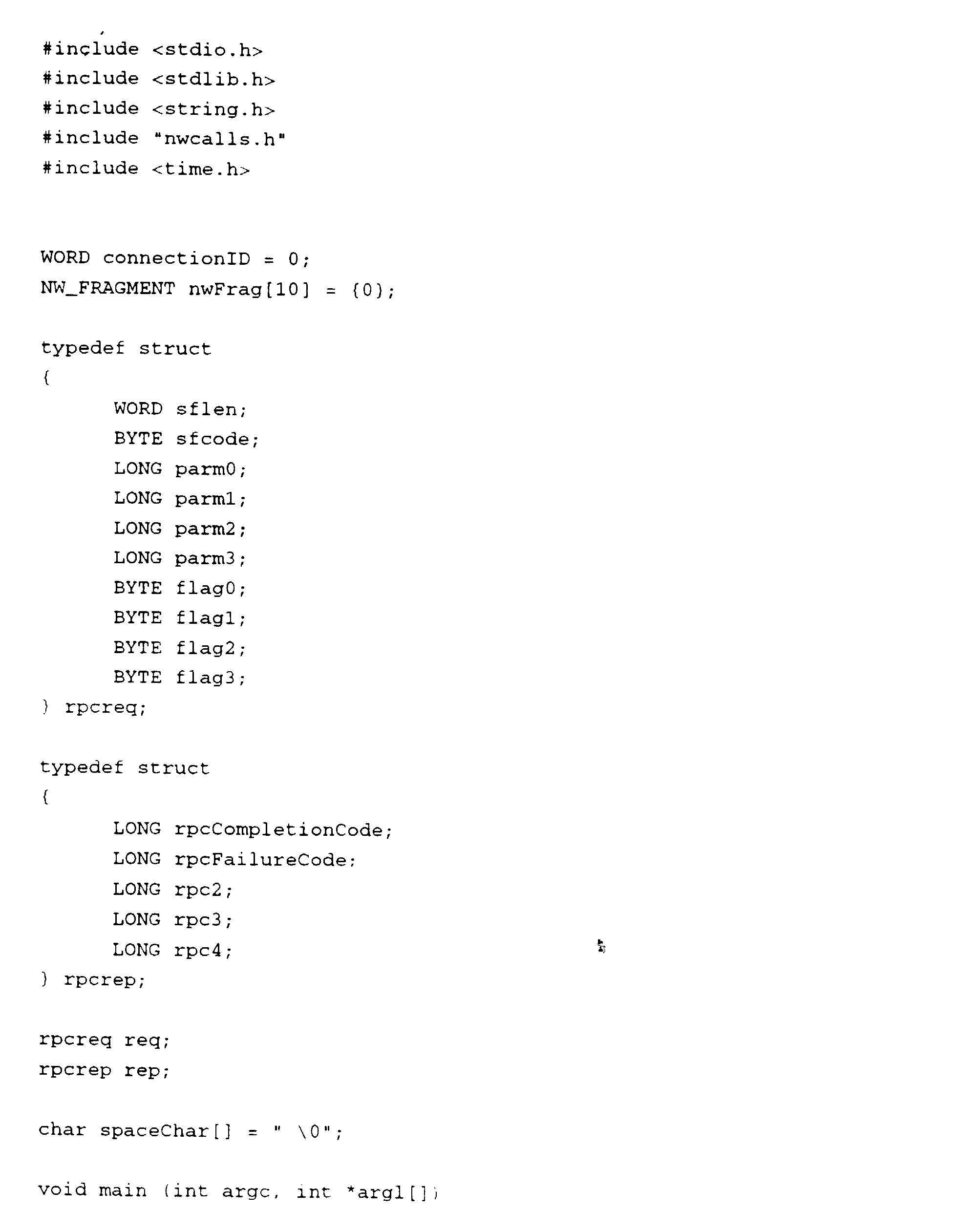

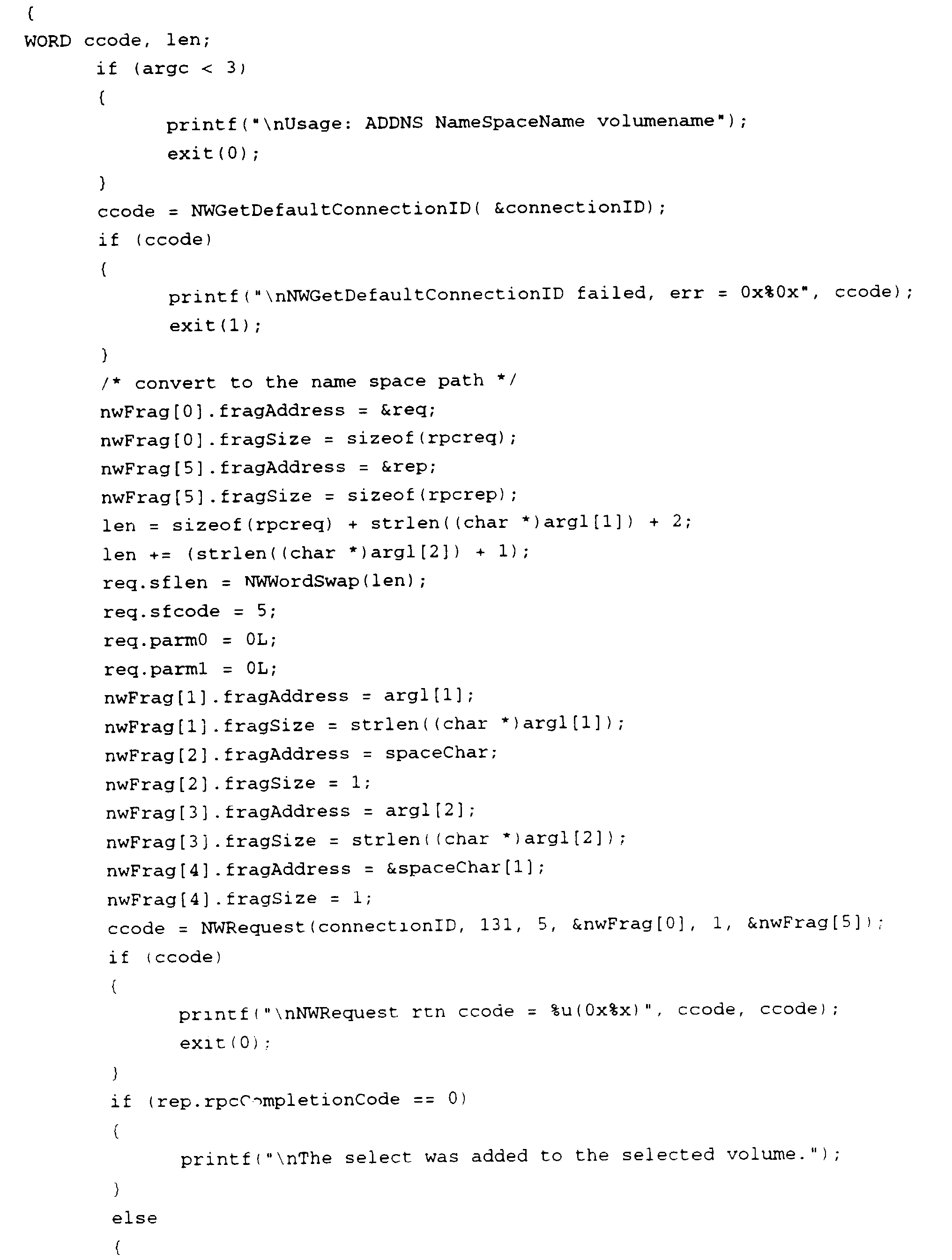

### Remote Services

Although many remote services are possible, seven are implemented in the current embodiment, including "RPC Load an NLM," "RPC Unload an NLM," "RPC Mount a Volume," RPC Dismount a Volume," RPC Add Name Space to Volume," "RPC Set Set Command Value," and "RPC Execute NCF File." "RPC Load and NLM" is disucussed above. The remainder are discussed below.**RPC Unload an NLM**

This aspect of the present invention handles client requests to unload a running process in the remote computer. A suitable request/reply format for this remote procedure call may be implemented as follows:

| ***Request Format*** | | | |
|---|---|---|---|
| Offset | Content | | Type |
| 0 | RequestType | | (0x2222)WORD |
| 2 | SequenceNumber | (LastSeq+1) | BYTE |
| 3 | ConnectionHigh | (ServiceConn) | BYTE |
| 4 | TaskNumber | | (CurrentTaskNum)BYTE |
| 5 | Connection Low | (ServiceConn) | BYTE |
| 6 | FunctionCode | | (131)BYTE |
| 7 | SubFuncStrucLen | (see below) | WORD (Hi Lo format) |
| 9 | SubFuncCode | | (02)BYTE |
| 10 | reserved | | (0)LONG[4] |
| 26 | reservedFlags | | {0}BYTE[4] |
| 30 | PathAndName | (see below) | BYTE[] |

**TABLE 2**

| **ReplyFormat** | | | |
|---|---|---|---|
| **Offset** | **Content** | | **Type** |
| 0 | ReplyType | | (0x3333)WORD |
| 2 | SequenceNumber | (ReqSeqNum) | BYTE |
| 3 | ConnectionHigh | (ServiceConn) | BYTE |
| 4 | TaskNumber | | (CurrentTaskNum)BYTE |
| 5 | ConnectionLow | (ServiceConn) | BYTE |
| 6 | CompletionCode | (variable) | BYTE |
| 7 | ConnStatusFlags | (variable) | BYTE |
| 8 | RPCccode | | (see below)LONG |
| 12 | reserved | | (0)LONG |

### CompletionCode

- 0: Successful
- 251: Invalid Subfunction Request

### RPCccode

- 0: Successful completion of the request RPC
- 158: Bad File Name or No File Name given

### SubFuncStrucLen

Sub function length is suitably 21 plus the size of the PathAndName (ASCIIZ) including the terminating null.

### PathAndName

ASCII path and file name to load.
- FORMAT:: {volume name:}{path\...}file name\0

### RPC Mount Volume

*This aspect of the invention permits the client software to mount a remote storage volume. The request/reply format is as follows:*

| *Request Format* | | | |
|---|---|---|---|
| *Offset* | *Content* | | *Type* |
| *0* | *RequestType* | | *(0x2222)WORD* |
| *2* | *SequenceNumber* | *(Lastseq+1)* | *BYTE* |
| *3* | *ConnectionHigh* | *(ServiceConn)* | BYTE |
| *4* | *TaskNumber* | | *(CurrentTaskNum)BYTE* |
| *5* | *ConnectionLow* | *(ServiceConn)* | *BYTE* |
| *6* | *FunctionCode* | | *(131)BYTE* |
| *7* | *SubfuncstrucLen* | *(see below)* | *WORD (Hi Lo format)* |
| *9* | *SubFuncCode* | | *(03)BYTE* |
| *10* | *reserved* | | *(0)LONG[4]* |
| *26* | *reservedFlags* | | *{0}BYTE[4]* |
| *30* | *VolumeName* | | *(see below)ASCIIZ* |

| *ReplyFormat* | | | |
|---|---|---|---|
| *Offset* | *Content* | | *Type* |
| *0* | *Reply Type* | | *(0x3333)WORD* |
| *2* | *SequenceNumber* | *(ReqSeqNum)* | *BYTE* |
| *3* | *ConnectionHigh* | *(ServiceConn)* | *BYTE* |
| *4* | *TaskNumber* | | *(CurrentTaskNum)BYTE* |
| *5* | *ConnectionLow* | *(ServiceConn)* | *BYTE* |
| *6* | *CompletionCode* | *(variable)* | *BYTE* |
| *7* | *ConnStatusFlags* | *(variable)* | *BYTE* |
| *8* | *RPCccode* | | *(see below)LONG* |
| *12* | *reserved* | | *(0)LONG[4]* |
| *28* | *VolumeNumber* | *(variable)* | *LONG* |

### Completion Code

- *0*: *Successful*
- *251*: *Invalid Subfunction Request*

### RPCccode

- *0*: *Successful completion of the request RPC*
*Invalid Volume Name*
*Voume Already Mounted*

### SubFuncStrucLen

*Sub function length will be 21 plus the* size *of the VolumeName (ASCIIZ) including the terminating null.*

### VolumeName

*Volume Name (in ASCIIZ format) to be mounted.*
- *FORMAT:*: *volume name\0*

### RPC Dismount Volume

*This aspect of the invention dismounts a volume on the remote computer. The request/reply format* is *as follows:*

| *Request Format* | | | |
|---|---|---|---|
| *Offset* | *Content* | | *Type* |
| *0* | *RequestType* | | *(0x2222)WORD* |
| *2* | *SequenceNumber* | *(LastSeq+1)* | *BYTE* |
| *3* | *ConnectionHigh* | *(ServiceConn)* | *BYTE* |
| *4* | *TaskNumber* | | *(CurrentTaskNum)BYTE* |
| *5* | *ConnectionLow* | *(ServiceConn)* | *BYTE* |
| *6* | *FunctionCode* | *(131)* | *BYTE* |
| *7* | *SubfuncstrucLen* | *(21)* | *WORD (Hi Lo format)* |
| *9* | *SubFuncCode* | | *(04)BYTE* |
| *10* | *reserved* | | *(0)LONG[4]* |
| *26* | *reservedFlags* | | *{0}BYTE[4]* |
| *30* | *VolumeName* | | *(see below)ASCIIZ* |

| *ReplyFormat* | | | |
|---|---|---|---|
| *Offset* | *Content* | | *Type* |
| *0* | *Reply Type* | | *(0x3333)WORD* |
| *2* | *SequenceNumber* | *(ReqSeqNum)* | *BYTE* |
| *3* | *ConnectionHigh* | *(ServiceConn)* | *BYTE* |
| *4* | *TaskNumber* | | *(CurrentTaskNum)BYTE* |
| *5* | *ConnectionLow* | *(ServiceConn)* | *BYTE* |
| *6* | *Completion Code* | *(variable)* | *BYTE* |
| *7* | *ConnStatusFlags* | *(variable)* | *BYTE* |
| *8* | *RPCccode* | | *(see below)LONG* |
| *12* | *reserved* | | *(0)LONG* |

### CompletionCode

- *0*: *Successful*
- *251*: *Invalid Subfunction Request*

*RPCccode*
- *0*: *Successful completion of the request RPC*
*Invalid Volume Name*

### VolumeName

*Volume Name (in ASCIIZ format) to be dismounted.*
- *FORMAT:*: *volume name\0*

### RPC Add Name Space To Volume

*This aspect of the present invention permits a user to dynamically add a specified name space to a mounted volume on the remote computer. A name space supports specific attributes for a particular client, such as file name length, file characters, case sensitivity, multiple files (such as a resource file containing formating information), vector graphics, and other such functions. The request/reply format in the NetWare Core Protocol is:Request Format*

| *Offset* | *Content* | | *Type* |
|---|---|---|---|
| *0* | *RequestType* | | *(0x2222)WORD* |
| *2* | *SequenceNumber* | *(LastSeq+1)* | *BYTE* |
| *3* | *ConnectionHigh* | *(ServiceConn)* | *BYTE* |
| *4* | *TaskNumber* | | *(CurrentTaskNum)BYTE* |
| *5* | *ConnectionLow* | *(ServiceConn)* | *BYTE* |
| *6* | *FunctionCode* | | *(131)BYTE* |
| *7* | *SubFuncStrucLen* | *(05)* | *WORD (Hi Lo format)* |
| *9* | *SubFuncCode* | | *(04)BYTE* |
| *10* | *reserved* | | *(0)LONG[4]* |
| *26* | *reservedFlags* | | *{0}BYTE[4]* |
| *30* | *AddNameSpace* | *(see below)* | *ASCIIZ* |

| *ReplyFormat* | | | |
|---|---|---|---|
| *Offset* | *Content* | | *Type* |
| *0* | *Reply Type* | | *(0x3333)WORD* |
| *2* | *SequenceNumber* | *(ReqSeqNum)* | *BYTE* |
| *3* | *ConnectionHigh* | *(ServiceConn)* | *BYTE* |
| *4* | *TaskNumber* | | *(CurrentTaskNum)BYTE* |
| *5* | *ConnectionLow* | *(ServiceConn)* | *BYTE* |
| *6* | *CompletionCode* | *(variable)* | *BYTE* |
| *7* | *ConnStatusFlags* | *(variable)* | *BYTE* |
| *8* | *RPCccode* | | *(see below)LONG* |
| *12* | *reserved* | | *(0)LONG[4]* |

### CompletionCode

- *0*: *Successful*
- *251*: *Invalid Subfunction Request*

### RPCccode

- *0*: *Successful completion of the request RPC*

### SubFuncStrucLen

*Sub function length will be 21 plus the size of the AddNameSpace string (ASCIIZ) including the terminating null.*

### Add Name Space

*AddNameSpace string (in ASCIIZ form) to add the name space to a selected volume name.*
- *FORMAT:*: *"NameSpaceName {TO} {VOLUME} VolumeName\0"*

| *NameSpaceName Format:* | |
|---|---|
| *Short Name* | *Long Name* |
| *MAC* | *MACINTOSH* |
| *UNIX* | *UNIX* |
| *FTAM* | *FTAM* |
| *OS2* | *OS2* |
| *NF* | |

### RPC Set Set Command Value

*This aspect of the present invention allows the client to change the current value of a set command on the remote computer. In the NetWare environment, the set command determines such things as communications parameters, memory allocations, file caching, directory caching,* *file system parameters, file locking parameters, transaction tracking, and disk management. The request/reply format is:Request Format*

| *Offset* | *Content* | | *Type* |
|---|---|---|---|
| *0* | *RequestType* | | *(0x2222)WORD* |
| *2* | *SequenceNumber* | *(LastSeq+1)* | *BYTE* |
| *3* | *ConnectionHigh* | *(ServiceConn)* | *BYTE* |
| *4* | *TaskNumber* | | *(CurrentTaskNum)BYTE* |
| *5* | *ConnectionLow* | *(ServiceConn)* | *BYTE* |
| *6* | *FunctionCode* | | *(131)BYTE* |
| *7* | *SubFuncStrucLen* | *(06)* | *WORD (Hi Lo format)* |
| *9* | *SubFuncCode* | | *(04)BYTE* |
| *10* | *typeFlag* | | *(see below)LONG* |
| *14* | *Value* | | *(see below)LONG* |
| *18* | *reserved* | | *(0)LONG[2]* |
| *26* | *reservedFlags* | | *{0}BYTE[4]* |
| *30* | *SetCmdName* | | *(see below)ASCIIZ* |
| *xx* | *{optional string}* | *(see typeFlag)* | *ASCIIZ* |

| *ReplyFormat* | | | |
|---|---|---|---|
| *Offset* | *Content* | | *Type* |
| *0* | *Reply Type* | | *(0x3333)WORD* |
| *2* | *SequenceNumber* | *(ReqSeqNum)* | *BYTE* |
| *3* | *ConnectionHigh* | *(ServiceConn)* | *BYTE* |
| *4* | *TaskNumber* | | *(CurrentTaskNum)BYTE* |
| *5* | *ConnectionLow* | *(ServiceConn)* | *BYTE* |
| 6 | *CompletionCode* | *(variable)* | *BYTE* |
| *7* | *ConnStatusFlags* | *(variable)* | *BYTE* |
| *8* | *RPCccode* | | *(see below)LONG* |
| *12* | *reserved* | | *(0)LONG[4]* |

### Completion Code

- *0*: *Successful*
- *251*: *Invalid Subfunction Request*

### RPCccode

- *0*: *Successful completion of the request RPC*

### SubFuncStrucLen

*Sub function length will be 21 plus the size of the SetCmdName including the terminating null*. *If typeFlag is zero, then the optional string size including the null* will *must be included in the Sub Func Struc Len field.*

### typeFlag

*If zero, then the optional string, which follows the SetCmdName, is the new value of the set command. If one, the the Value field contains the new value of the set command.*

### Value

*New value of the set command parameter (if typeFlag is equal to one).*

### Set Cmd Name

*Set parameter command name in ASCIIZ format.*

### {optional string}

*If typeFlag* is *zero, this string used for the new set command parameter value. The set command parameter types (SP_TYPE_STRING & SP_TYPE_TIME_OFFSET) require a string instead of a numerical value.*

### RPC Execute NCF File

This aspect of the present invention allows the execution of a selected batch file on the remote computer. Thus the client software can copy a batch file to the server and then request the server to execute the batch file. The batch file must comply with the underlying server operating systement requirments. In the present embodiment as implemented in the NetWare Core Protocoi environments the request/reply format is:**Request Format**

| **Offset** | **Content** | | **Type** |
|---|---|---|---|
| 0 | RequestType | | (0x2222)WORD |
| 2 | SequenceNumber | (Lastseq+1) | BYTE |
| 3 | ConnectionHigh | (ServiceConn) | BYTE |
| 4 | TaskNumber | | (CurrentTaskNum)BYTE |
| 5 | ConnectionLow | (ServiceConn) | BYTE |
| 6 | FunctionCode | | (131)BYTE |
| 7 | SubFuncStrucLen | (see below) | WORD (Hi Lo format) |
| 9 | SubFuncCode | | (07)BYTE |
| 10 | reserved | | (0)LONG[4] |
| 26 | reservedFlags | | {0}BYTE[4] |
| 30 | PathAndName | (see below) | BYTE[] |

| **ReplyFormat** | | | |
|---|---|---|---|
| **Offset** | **Content** | | **Type** |
| 0 | ReplyType | | (0x3333)WORD |
| 2 | SequenceNumber | (ReqSeqNum) | BYTE |
| 3 | ConnectionHigh | (ServiceConn) | BYTE |
| 4 | TaskNumber | | (CurrentTaskNum)BYTE |
| 5 | ConnectionLow | (ServiceConn) | BYTE |
| 6 | CompletionCode | (variable) | BYTE |
| 7 | ConnStatusFlags | (variable) | BYTE |
| 8 | RPCccode | | (see below)LONG |
| 12 | reserved | | (0)LONG[4] |

### CompletionCode

- 0: Successful
- 251: Invalid Subfunction Request

### RPCccode

- 0: Successful completion of the request RPC
- 158: Bad File Name or No File Name given

### SubFuncStrucLen

Sub function length will be 21 plus the size of the PathAndName (ASCIIZ) including the terminating null.

### PathAndName

ASCIIZ path and file name to execute.
- FORMAT:: {volume name:}{path\...}file name\0

### Security

One aspect of the present invention is the reliance on the security inherent in the network communication protocol In the NetWare environment, the security in the NCP protocol is provided through digital packet signing. The method and apparatus used in the NCP network communications protocol is described in greater detail in U.S. Patent No. 5,349,642 issued September 20, 1994.

### Server Implementation

The implementation of the remote procedure calls within the server maps the calls to the appropriate server operting system functions. In this fashion, the server implementation avoids the remote console login approach where each keystroke from the client is captured, packaged and sent to the server and then entered through the system console. In one embodiment, this aspect of the present invention is implemented in the NetWare server environment as follows:

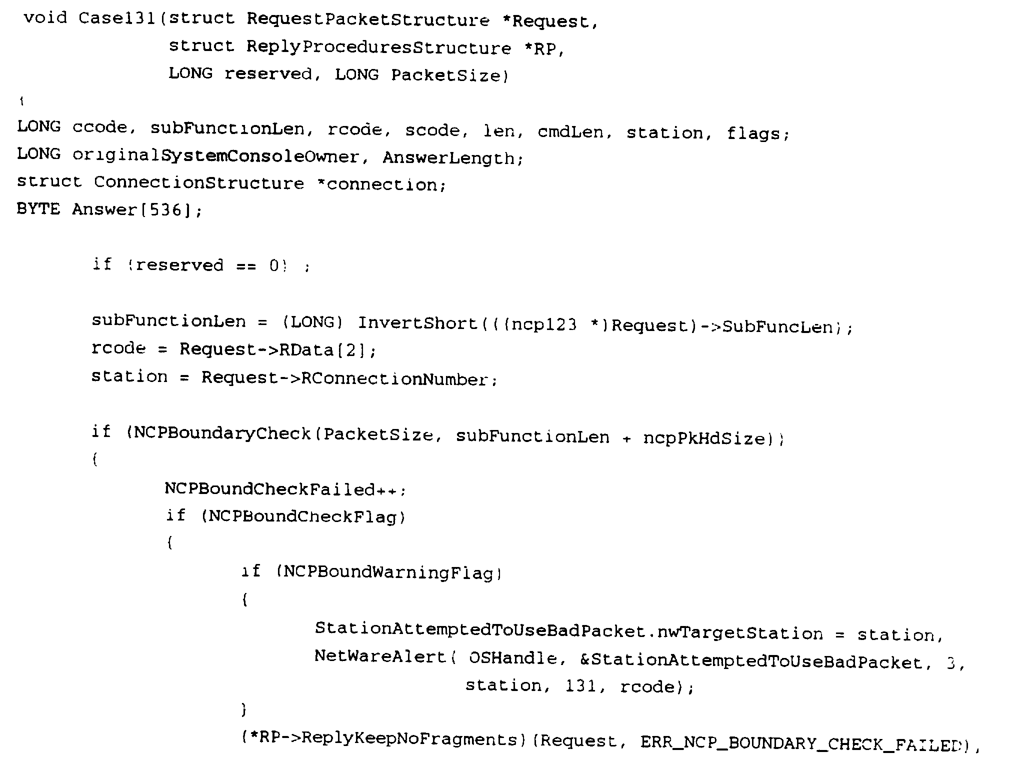

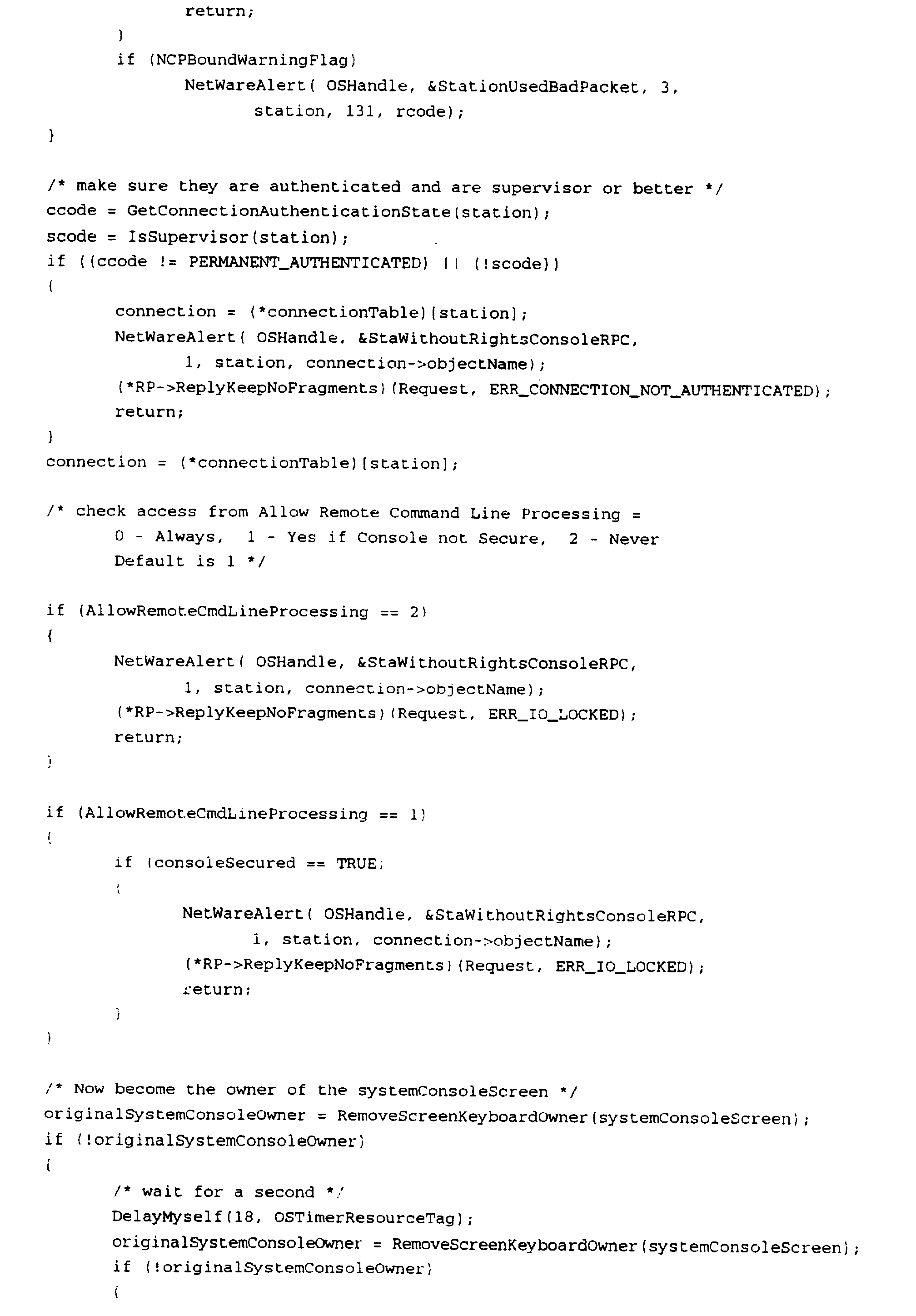

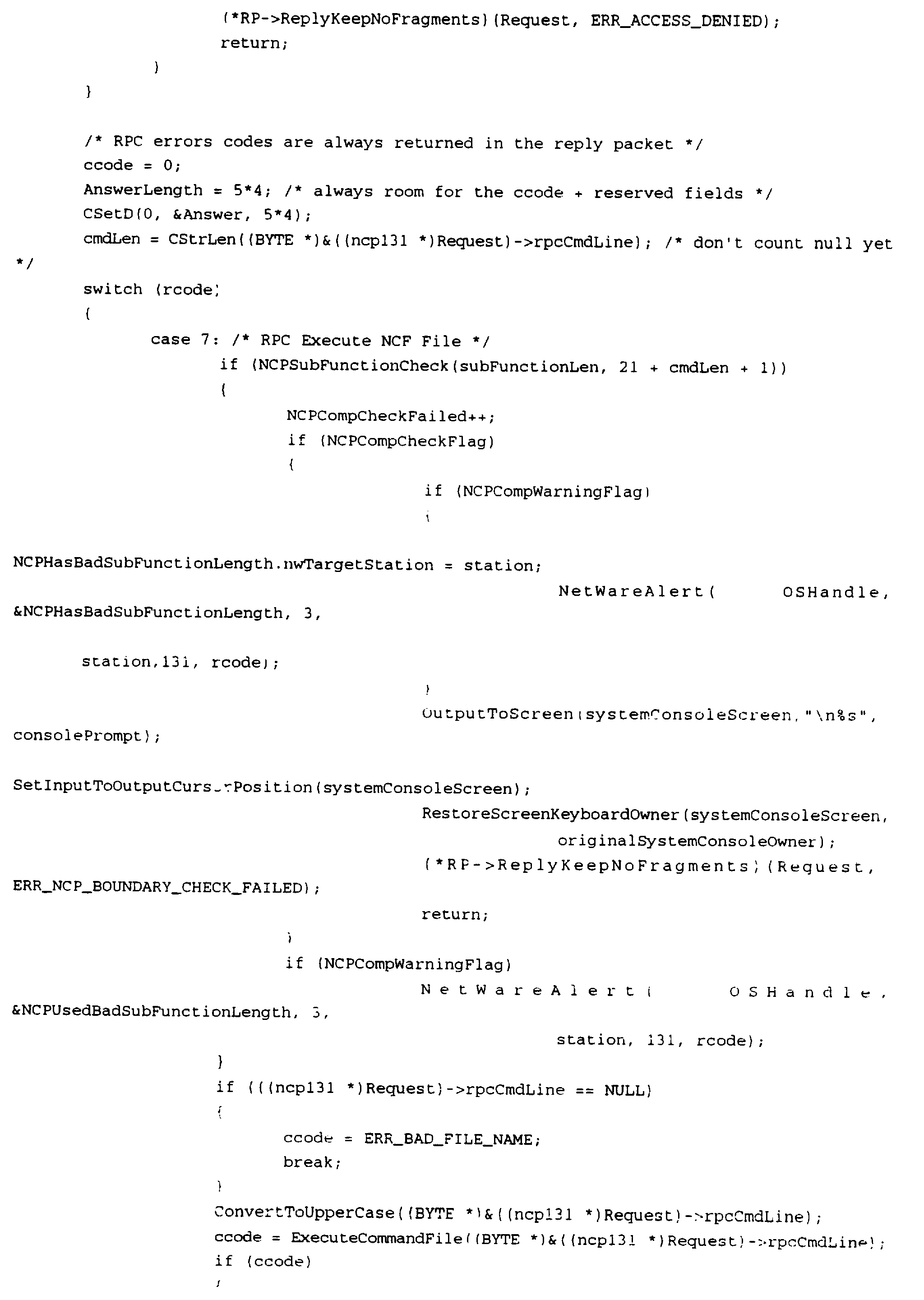

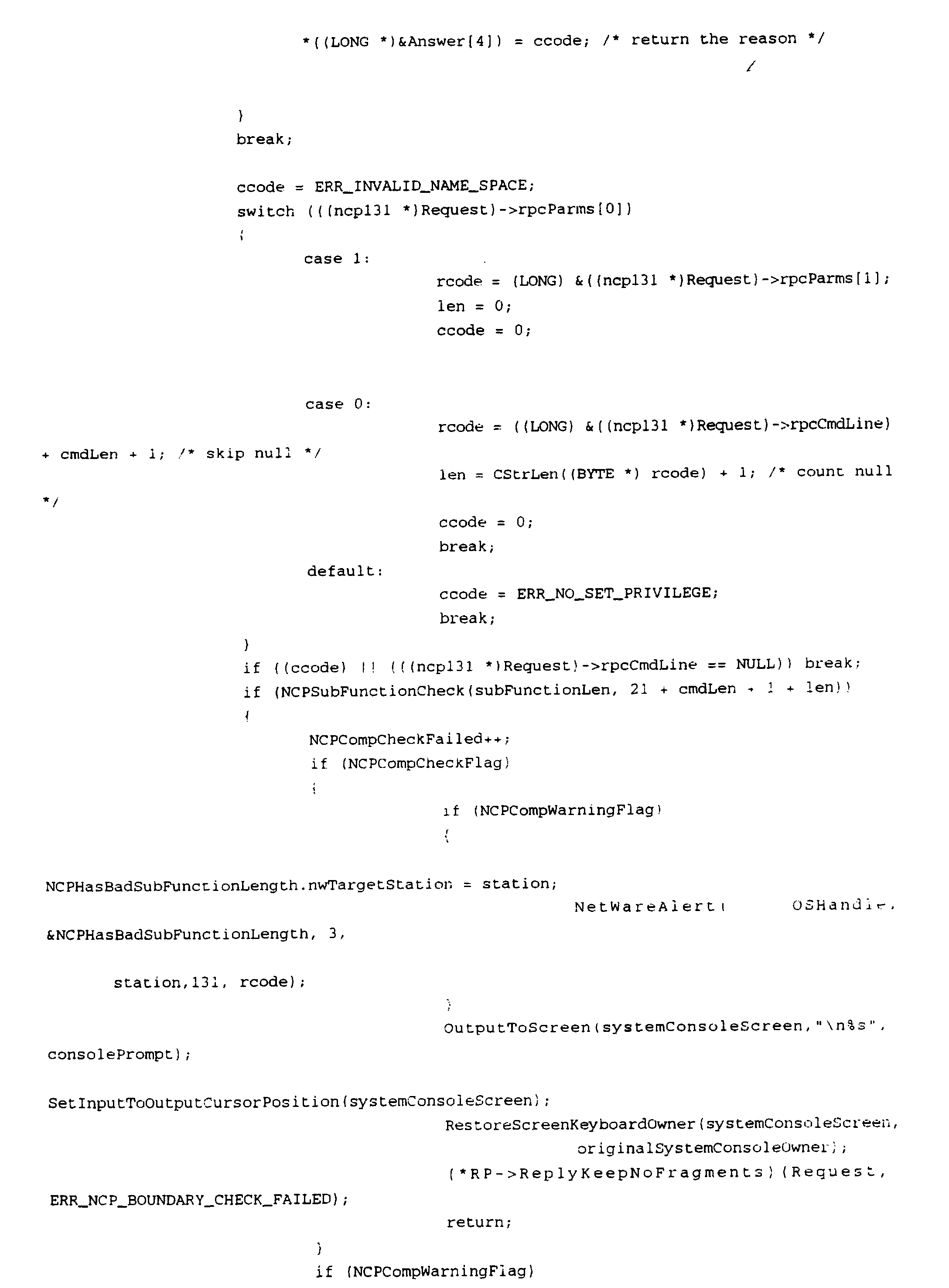

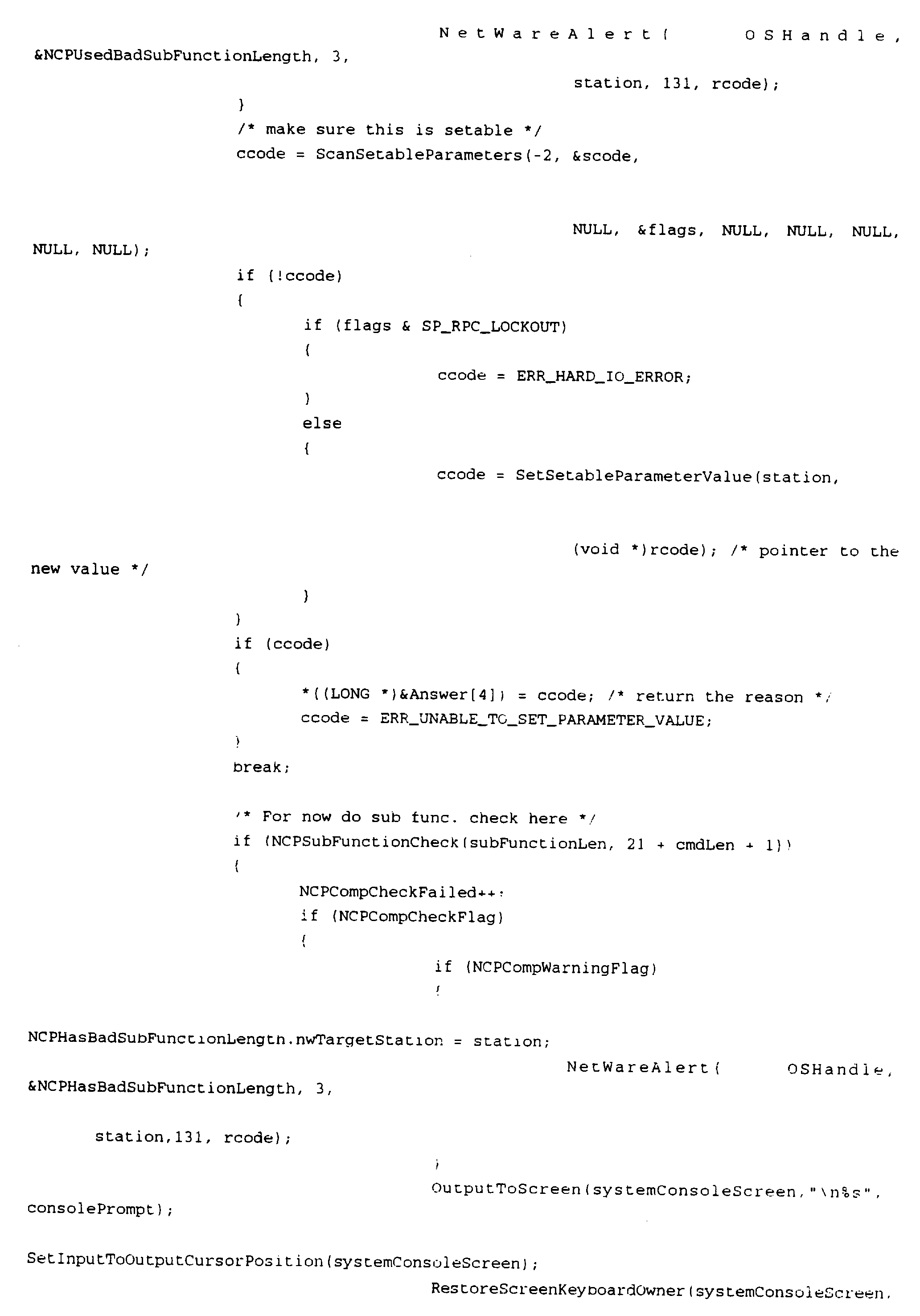

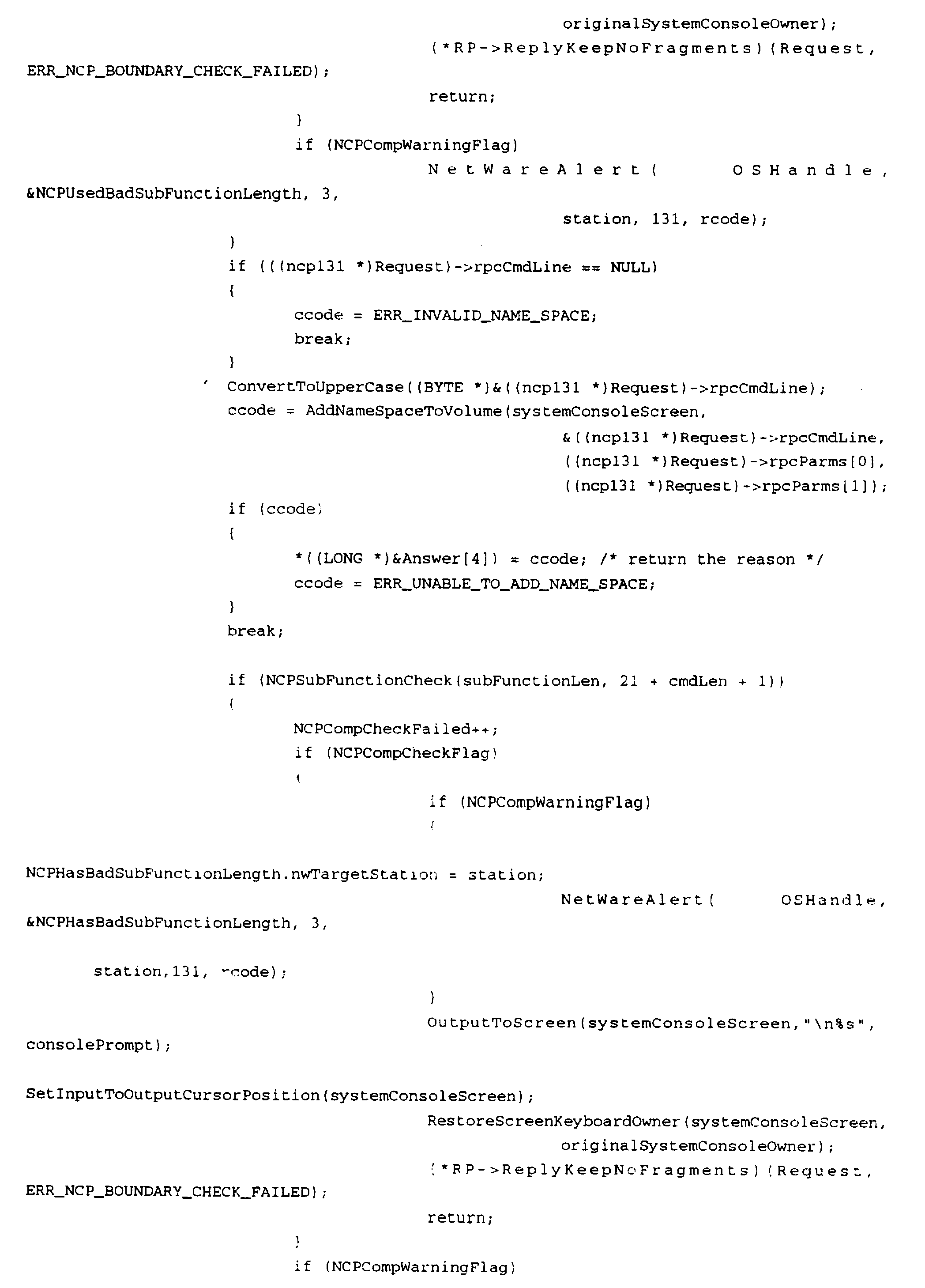

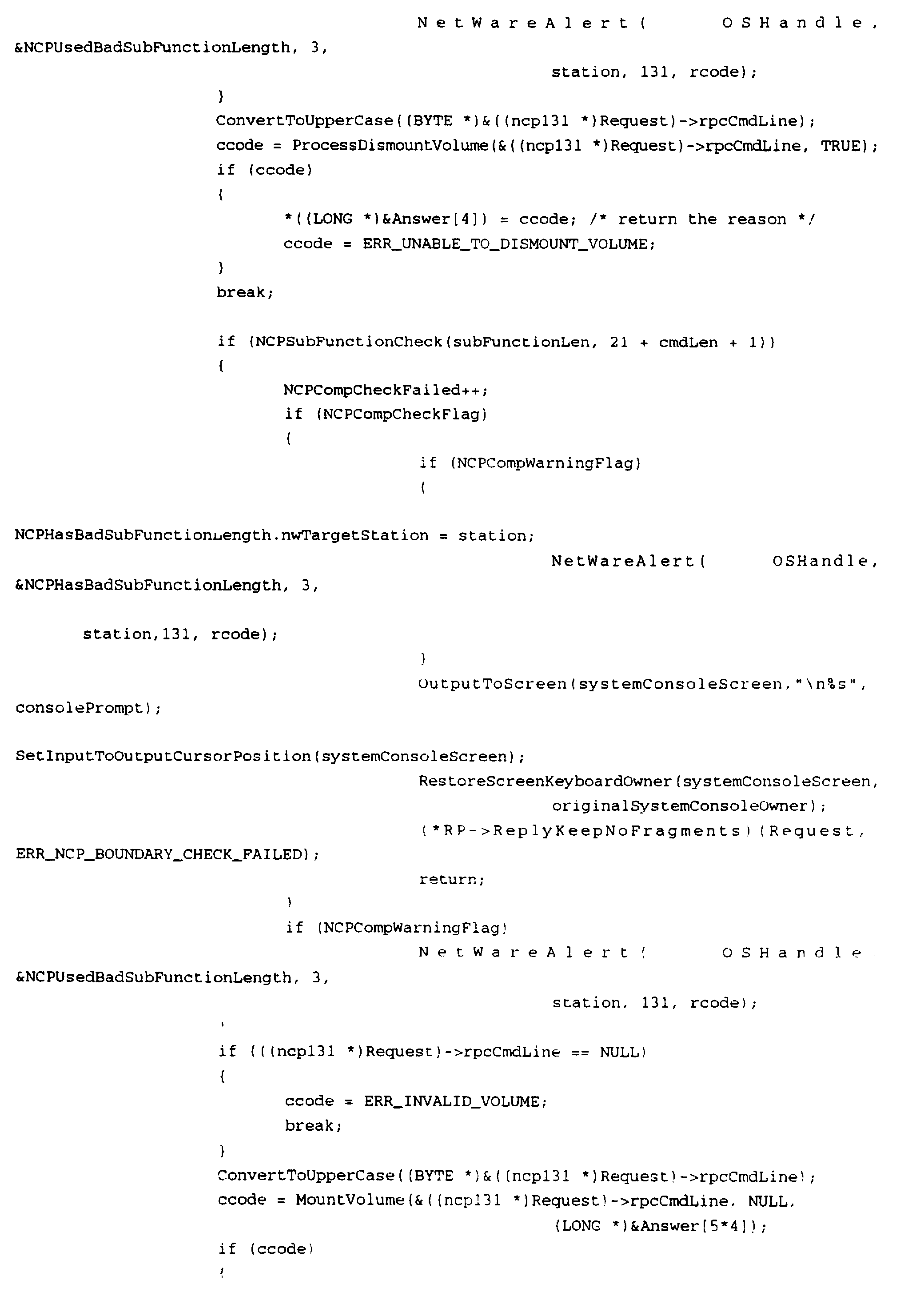

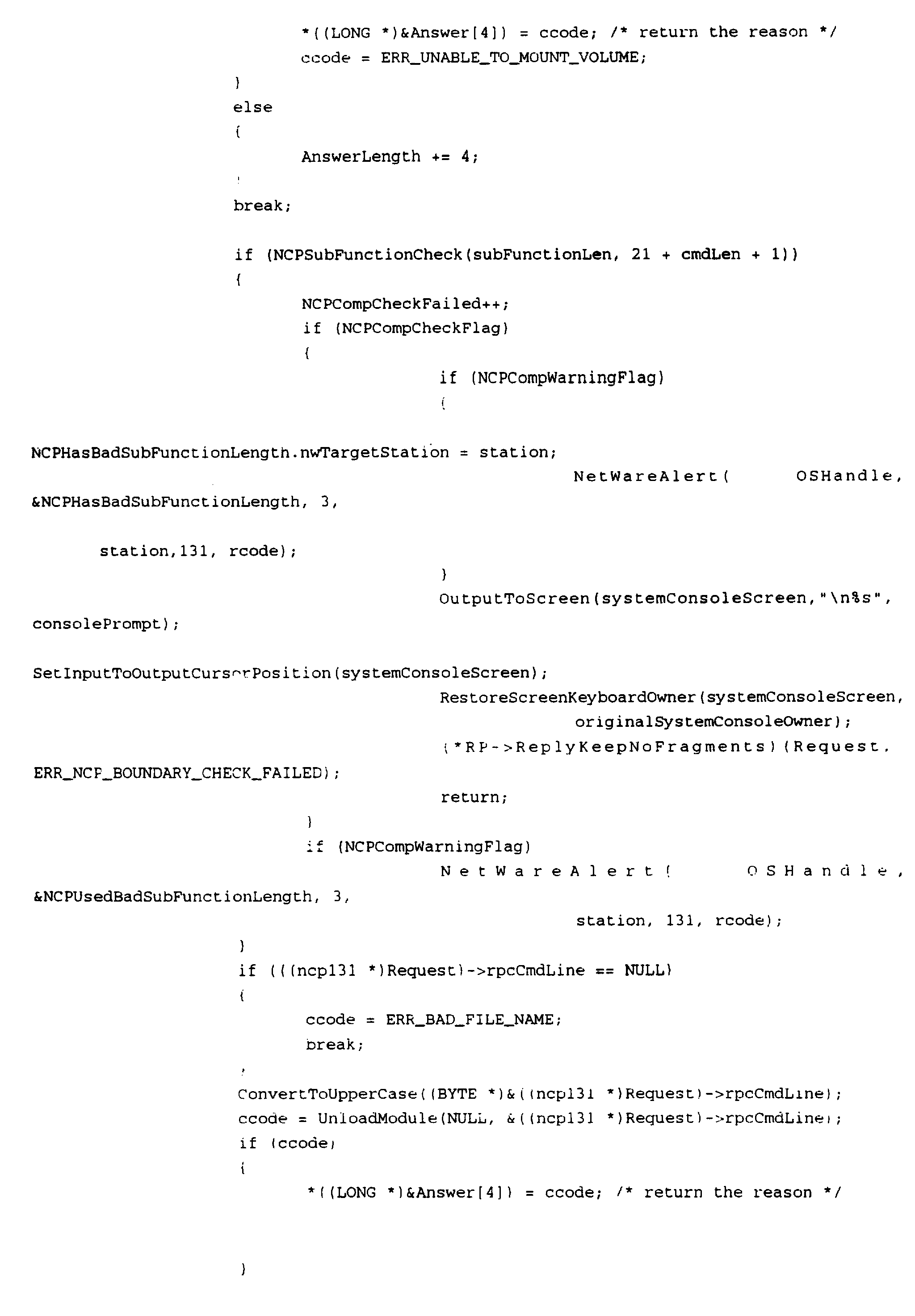

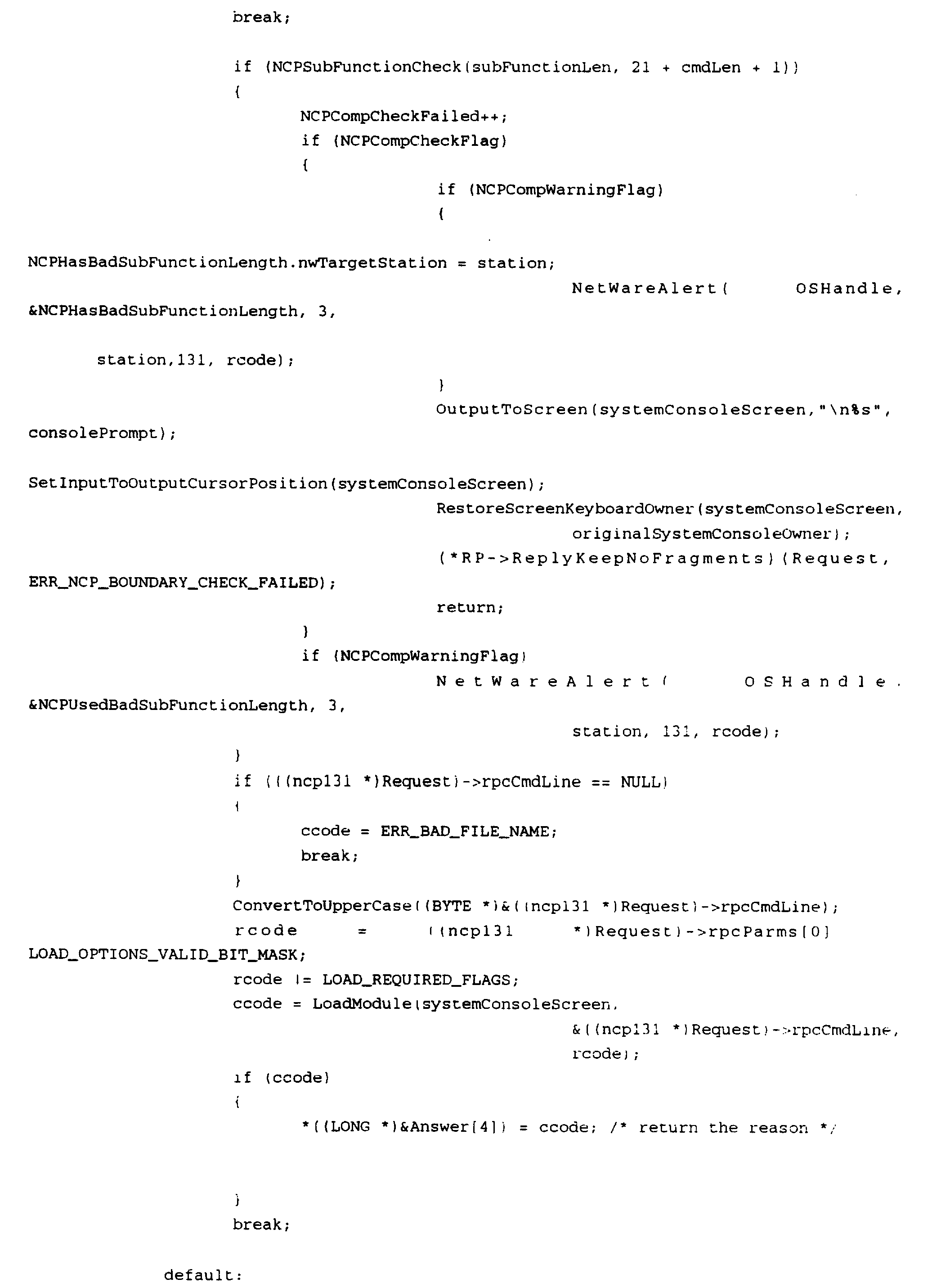

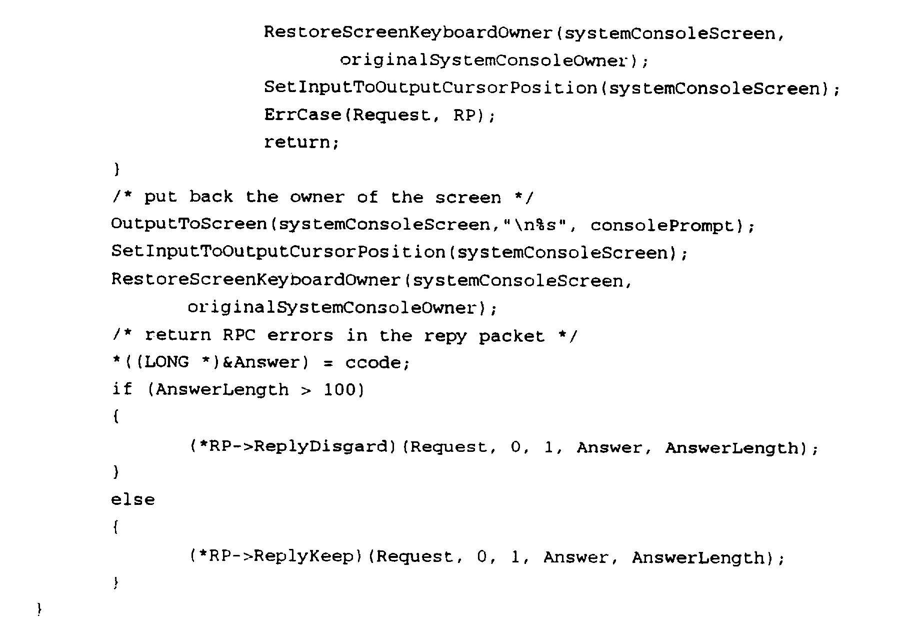

As a result of implementing this procedure, developers who wish to develop client software with the ability to load, unload or otherwise configure their remote server applications may do so using a network client and server operating system supporting the calls.

Although one embodiment of the invention has been illustrated and described. various modifications and changes may be made by those skilled in the art without departing from the scope of the invention.

## Claims

1. A method for remotely reconfiguring a server operating system from a client computer in a computer network (10) that includes
(a) a network client computer (20) configured to request and receive network services through the use of digital message packets, the client computer comprising a first processor (28) for executing computer programs, and user input and output hardware (22, 24), said client computer being assigned a unique user access password having a first level of security associated therewith;
(b) a network server computer (40) configured to request and receive network services through the use of digital message packets, the server computer comprising a processor (46) for executing computer programs, a hard drive (52) for storing a plurality of software modules, and a random access memory (RAM)(48) said server computer being assigned an administrator access password having a second level of security associated therewith, which second level of security is greater than said first level of security; and
(c) a server operating system, including a native communications protocol, resident in said server computer;
said method of remotely reconfiguring said server operating system from said client computer comprising the initial step of:
entering said user access password into said user input hardware to thereby establish a user session (302) at said client computer;
and characterized by the further steps of:
transmitting (304, 306, 308, 310, 312, 314, 316) a server process in the form of a module of executable code from said client computer to said server computer;
storing (326) said server process at a first address on said hard drive of said server computer;
transmitting (328, 330, 332, 334, 336) from said server computer to said client computer indicia of said first address;
constructing, by said client computer a first digital message packet comprising a first field (204) indicative of a request to load a software module, and a second field indicative of said first address;
transmitting said first packet from said client computer to said server computer:
processing said first and second fields by said server operating system,
retrieving said server process from said first address on said hard drive;
loading said server process into said RAM to thereby dynamically reconfigure said server operating system without using said administrator access password; and
constructing a response message, by said server computer and transmitting said response message to said client computer after said loading step, said response message indicating that said server process is loaded into said RAM.

2. The method of Claim 1, wherein the establishment of the user session (302) at said client computer further comprises the step of loading a client application onto said client computer, said client application executing the further steps required to reconfigure the server operating system in accordance with the method of claim 1.

3. The method of Claim 2, further comprising the step of running said client application of said client computer interactively with said server process.

4. The method of Claim 3, further comprising the step of: transmitting data packets between said client computer and said server computer using said reconfigured server operating system.

5. The method of Claim 1, wherein said step of constructing a first digital message packet by said client computer comprises building a message packet including an Internetwork Packet Exchange (IPX) header together with said first and second fields (204, 208).

6. The method of Claim 1, wherein said step of constructing a first digital message packet by said client computer comprises the steps of:
retrieving a partially constructed digital message packet from a look-up table in said client computer; and
manipulating said first and second fields in accordance with user requests received from said input hardware.

7. The method of Claim 1, wherein said server process comprises a network operating system module.

8. The method of Claim 1, wherein said first field (204) comprises indicia of a predetermined remote procedure call.

9. The method of Claim 8, wherein said remote procedure call (RPC) comprises a remote procedure call to load a NetWare Loadable Module (NLM).

10. The method of Claim 1, wherein said second field comprises indicia of a logical address.

11. The method of Claim 1, wherein said second field comprises indicia of a filename.

12. The method of Claim 1, wherein said constructing step further comprises adding a plurality of navigational fields to said first digital message packet in addition to said first and second fields, and wherein said processing step comprises stripping off said plurality of fields such that said server operating system processes only said first and second fields.

13. The method of Claim 1, further comprising the steps of:
loading a client application onto said client computer and running said client application; and
accessing, by said client application, said server process during operation of said client application.

14. A client/server computer system, comprising a network client computer (20) configured to request and receive network services through the use of digital message packets (200), said client computer comprising a first process server for executing computer programs, and a network server computer (40) configured to receive network service requests from said client computer through the use of digital message packets, the server computer comprising a second processor (46) for executing computer programs, a hard drive (52) for storing a plurality of software modules, a RAM (48), and a server operating system including a native communications protocol resident in said server computer, characterized in that said client/server computer system comprises:
means for transmitting a server application in the form of a module of executable code from said client computer to said server computer;
means for storing said server application at a first address on said hard drive of said server computer;
means for transmitting from said server computer to said client computer indicia of said first address;
means for constructing, by said client computer, a first digital message packet comprising indicia of a request to load a software module and indicia of said first address;
means for transmitting said first message packet from said client computer to said server computer;
means, responsive to said first packet, for retrieving said server application from said first address on said hard drive; and
means for loading said server application into said RAM to thereby dynamically reconfigure said server operating system from said client computer.

15. The computer system of claim 14, further comprising:
a keyboard (24) configured to permit a user to enter a unique user access password into said client computer (20), the password having a first level of security associated therewith;
an administrator access password associated with said server computer, said administrator access password having a second level of security associated therewith;
means for establishing a user session at said client computer upon entry into said client computer of said user access password; and means for dynamically reconfiguring said server operating system from said client computer without using said administrator access password.

16. The computer system of claim 14, wherein said server computer further comprises means for constructing a response message and transmitting said response message to said client computer for indicating that said server application is loaded into said RAM.

17. The computer system of claim 14, further comprising means for transmitting data packets between said client computer and said server computer using said reconfigured server operating system.

18. The computer system of claim 14, wherein said server application comprises a network operating system module.

19. The computer system of claim 14, further comprising means for loading a client application onto said client computer and running said client application interactively with said server application.

## Patentansprüche

1. Verfahren zur ferngesteuerten Rekonfiguration eines Serverbetriebssystems von einem Klientencomputer in einem Computernetzwerk (10), welches aufweist
(a) einen Netzwerkklientencomputer (20), der so aufgebaut ist, daß er Netzwerkdienste durch die Verwendung digitaler Nachrichtenpakete anfordert und empfängt, wobei der Klientencomputer einen ersten Prozessor (28) zur Ausführung von Computerprogrammen sowie Benutzereingabe- und Ausgabehardware (22, 24) aufweist, und der Klientencomputer durch ein eindeutiges Benutzerzugriffskennwort zugeordnet wird, welchem ein erstes Sicherheitsniveau zugeordnet ist;
(b) einen Netzwerkservercomputer (40), der dazu ausgebildet ist, Netzwerkdienste durch die Verwendung digitaler Nachrichtenpakete anzufordern und zu empfangen, wobei der Servercomputer einen Prozessor (46) zur Ausführung von Computerprogrammen aufweist, ein Festplattenlaufwerk (52) zum Speichern mehrerer Softwaremodule, und einen Speicher (RAM) (48) mit wahlfreiem Zugriff, und der Servercomputer durch ein Verwalterzugriffskennwort zugeordnet wird, dem ein zweites Sicherheitsniveau zugeordnet ist, wobei das zweite Sicherheitsniveau höher als das erste Sicherheitsniveau ist; und
(c) ein Serverbetriebssystem, einschließlich eines nativen Kommunikationsprotokolls, welches in dem Servercomputer liegt;
wobei das Verfahren zum ferngesteuerten Rekonfigurieren des Serverbetriebssystems von dem Klientencomputer aus folgende Anfangs schritte aufweist:
Einabe des Benutzerzugriffskennworts in die Benutzereingabehardware, um hierdurch eine Benutzersession (302) an dem Klientencomputer einzurichten; und
gekennzeichnet durch folgende weitere Schritte:
Übertragung (304, 306, 308, 310, 312, 314, 316) eines Servervorgangs in Form eines Moduls aus ausführbaren Codes von dem Klientencomputer an den Servercomputer;
Speichern (326) des Servervorgangs in einer ersten Adresse auf dem Festplattenlaufwerk des Servercomputers;
Übertragung (328, 330, 332, 334, 336) von Kennzahlen der ersten Adresse von dem Servercomputer an den Klientencomputer;
Konstruktion, durch den Klientencomputer, eines ersten digitalen Nachrichtenpakets, welches ein erstes Feld (204) aufweist, welches eine Anforderung zum Laden eines Softwaremoduls anzeigt, sowie ein zweites Feld, welches die erste Adresse anzeigt;
Übertragung des ersten Pakets von dem Klientencomputer an den Servercomputer;
Verarbeitung des ersten und des zweiten Felds durch das Serverbetriebssystem;
Zurückholen des Servervorgangs von der ersten Adresse auf dem Festplattenlaufwerk;
Laden des Servervorgangs in das RAM, um hierdurch dynamisch das Serverbetriebssystem ohne Verwendung des Verwalterzugriffskennworts zu rekonfigurieren; und
Konstruktion einer Antwortnachricht durch den Servercomputer und Übertragung der Antwortnachricht an den Klientencomputer nach dem Ladeschritt, wobei die Antwortnachricht anzeigt, daß der Servervorgang in das RAM geladen ist.

2. Verfahren nach Anspruch 1, bei welchem die Einrichtung der Benutzersession (302) an dem Klientencomputer weiterhin den Schritt umfaßt, eine Klientenanwendung auf den Klientencomputer zu laden, wobei die Klientenanwendung die weiteren Schritte ausführt, die zum Rekonfigurieren des Serverbetriebssystems entsprechend dem Verfahren nach Anspruch 1 erforderlich sind.

3. Verfahren nach Anspruch 2, mit dem weiteren Schritt, die Klientenanwendung des Klientencomputers interaktiv mit dem Servervorgang ablaufen zu lassen.

4. Verfahren nach Anspruch 3, mit dem weiteren Schritt der Übertragung von Datenpaketen zwischen dem Klientencomputer und dem Servercomputer unter Verwendung des rekonfigurierten Serverbetriebssystems.

5. Verfahren nach Anspruch 1, bei welchem der Schritt der Konstruktion eines ersten digitalen Nachrichtenpakets durch den Klientencomputer den Aufbau eines Nachrichtenpakets mit einem Vorspann eines Internetword Packet Exchange (IPX) zusammen mit dem ersten und zweiten Feld (204, 208) aufweist.

6. Verfahren nach Anspruch 1, bei welchem der Schritt des Aufbaus eines ersten digitalen Nachrichtenpakets durch den Klientenkomputer folgende Schritte umfaßt:
Zurückholen eines teilweise konstruierten digitalen Nachrichtenpakets von einer Nachschlagetabelle in dem Klientencomputer; und
Manipulation des ersten und zweiten Feldes entsprechend Benutzeranforderungen, die von der Eingabehardware empfangen werden.

7. Verfahren nach Anspruch 1, bei welchem der Servervorgang ein Netzwerkbetriebssystemmodul umfaßt.

8. Verfahren nach Anspruch 1, bei welchem das erste Feld (204) Kennzahlen eines vorbestimmten Fernprozeduraufrufs aufweist.

9. Verfahren nach Anspruch 8, bei welchem der Fernprozeduraufruf (RPC) einen Fernprozeduraufruf zum Laden eines durch Netware ladbaren Moduls (NLM) aufweist.

10. Verfahren nach Anspruch 1, bei welchem das zweite Feld Kennzahlen einer logischen Adresse enthält.

11. Verfahren nach Anspruch 1, bei welchem das zweite Feld Kennzahlen eines Dateinamens enthält.

12. Verfahren nach Anspruch 1, bei welchem der Konstruktionsschritt weiterhin die Hinzufügung mehrerer Navigationsfelder zum ersten digitalen Nachrichtenpaket zusätzlich zum ersten und zweiten Feld umfaßt, und wobei der Verarbeitungsschritt das derartige Abstreifen der mehreren Felder umfaßt, daß das Serverbetriebssystem nur das erste und zweite Feld bearbeitet.

13. Verfahren nach Anspruch 1 mit folgenden weiteren Schritten:
Laden einer Klientenanwendung auf den Klientencomputer und Ablaufenlassen der Klientenanwendung; und
Zugriff, durch die Klientenanwendung, auf den Servervorgang während des Betriebs der Klientenanwendung.

14. Klienten/Server-Computersystem mit einem Netzwerkklientencomputer (20), der so aufgebaut ist, daß er Netzwerkdienste mit Hilfe der Verwendung digitaler Nachrichtenpakete (200) anfordert und empfängt, wobei der Klientencomputer einen ersten Vorgangsserver zur Ausführung von Computerprogrammen aufweist, sowie einen Netzwerkservercomputer (40), der so aufgebaut ist, daß er Netzwerkdienstanforderungen von dem Klientencomputer über die Verwendung digitaler Nachrichtenpakete empfängt, wobei der Servercomputer einen zweiten Prozessor (46) zur Ausführung von Computerprogrammen aufweist, ein Festplattenlaufwerk (52) zum Speichern mehrerer Softwaremodule, ein RAM (48), und ein Serverbetriebssystem einschließlich eines nativen Kommunikationsprotokolls, welches in dem Servercomputer liegt, dadurch gekennzeichnet, daß das Klienten/Servercomputersystem aufweist:
eine Vorrichtung zur Übertragung einer Serveranwendung in Form eines Moduls aus ausführbaren Code von dem Klientencomputer an den Servercomputer,
eine Vorrichtung zum Speichern der Serveranwendung in einer ersten Adresse auf dem Festplattenlaufwerk des Servercomputers,
eine Vorrichtung zur Übertragung von Kennzahlen der ersten Adresse von dem Servercomputer an den Klientencomputer;
eine Vorrichtung zum Konstruieren, durch den Klientencomputer, eines ersten digitalen Nachrichtenpakets, welches Kennzahlen einer Anforderung zum Laden eines Softwaremoduls sowie Kennzahlen der ersten Adresse aufweist;
eine Vorrichtung zur Übertragung des ersten Nachrichtenpakets von dem Klientencomputer an den Servercomputer;
eine auf das erste Paket reagierende Vorrichtung zum Zurückholen der Serveranwendung von der ersten Adresse auf dem Festplattenlaufwerk; und
eine Vorrichtung zum Laden der Serveranwendung in das RAM, um so dynamisch das Serverbetriebssystem von dem Klientencomputer zu rekonfigurieren.

15. Computersystem nach Anspruch 14, welches weiterhin aufweist:
eine Tastatur (24), die so aufgebaut ist, daß sie es einem Benutzer gestattet, ein eindeutiges Benutzerzugriffskennwort in den Klientencomputer (20) einzugeben, wobei dem Kennwort ein erstes Sicherheitsniveau zugeordnet ist;
ein Verwalterzugriffskennwort, welches dem Servercomputer zugeordnet ist, wobei dem Verwalterzugriffskennwort ein zweites Sicherheitsniveau zugeordnet ist;
eine Vorrichtung zum Einrichten einer Benutzersession an dem Klientencomputer nach Eingabe des Benutzerzugriffskennworts in den Klientencomputer; und
eine Vorrichtung zum dynamischen Rekonfigurieren des Serverbetriebssystems von dem Klientencomputer ohne Verwendung des Verwalterzugriffskennworts.

16. Computersystem nach Anspruch 14, bei welchem der Computer weiterhin eine Vorrichtung zum Konstruieren einer Antwortnachricht und zum Übertragen der Antwortnachricht an den Klientencomputer zur Anzeige aufweist, daß die Serveranwendung in das RAM geladen wird.

17. Computersystem nach Anspruch 14, welches weiterhin eine Vorrichtung zur Übertragung von Datenpaketen zwischen dem Klientencomputer und dem Servercomputer unter Verwendung des rekonfigurierten Serverbetriebssystems aufweist.

18. Computersystem nach Anspruch 14, bei welchem die Serveranwendung ein Netzwerkbetriebssystemmodul enthält.

19. Computersystem nach Anspruch 14, welches weiterhin einer Vorrichtung zum Laden einer Klientenanwendung auf den Klientencomputer und zum interaktiven Ablaufenlassen der Klientenanwendung mit der Serveranwendung aufweist.

## Revendications

1. Procédé pour reconfigurer à distance un système d'exploitation de serveurs à partir d'un ordinateur client dans un réseau d'ordinateurs (10) qui comprend :
(a) un ordinateur client du réseau (20) configuré pour demander et recevoir des services du réseau en utilisant des paquets de messages numériques, l'ordinateur client comprenant un premier processeur (28) pour exécuter des programmes d'ordinateur, et un matériel d'entrée et de sortie d'utilisateur (22, 24), un unique mot de passe d'accès d'utilisateur auquel est associé un premier niveau de sécurité étant affecté audit ordinateur client ;
(b) un ordinateur serveur du réseau (40) configuré pour demander et recevoir des services du réseau en utilisant des paquets de messages numériques, l'ordinateur serveur comprenant un processeur (46) pour exécuter des programmes d'ordinateur, un disque dur (52) pour stocker une multiplicité de modules de logiciels, et une mémoire vive (RAM) (48), un mot de passe d'accès d'administrateur auquel est associé un deuxième niveau de sécurité étant affecté audit ordinateur serveur, lequel deuxième niveau de sécurité est supérieur audit premier niveau de sécurité ; et
(c) un système d'exploitation de serveurs, comprenant un protocole de communication natif, résidant dans ledit ordinateur serveur,
ledit procédé de reconfiguration à distance dudit système d'exploitation de serveur à partir dudit ordinateur client comprenant l'étape initiale suivante :
- entrer ledit mot de passe d'accès d'utilisateur dans ledit matériel d'entrée d'utilisateur pour établir ainsi une session d'utilisateur (302) au niveau dudit ordinateur client ;
caractérisé par les autres étapes suivantes :
- transmettre (304, 306, 308, 310, 312, 314, 316) une procédure de serveur sous la forme d'un module de code exécutable depuis ledit ordinateur client audit ordinateur serveur ;
- stocker (326) ladite procédure de serveur au niveau d'une première adresse sur ledit disque dur dudit ordinateur serveur ;
- transmettre (328, 330, 332, 334, 336) depuis ledit ordinateur serveur audit ordinateur client des indices de ladite première adresse ;
- construire, par ledit ordinateur client, un premier paquet de messages numériques comprenant un premier champ (204) indicatif d'une demande pour charger un module de logiciel, et un deuxième champ indicatif de ladite première adresse ;
- transmettre ledit premier paquet depuis ledit ordinateur client audit ordinateur serveur ;
- traiter lesdits premier et deuxième champs par ledit système d'exploitation de serveurs ;
- récupérer ladite procédure de serveur depuis ladite première adresse sur ledit disque dur ;
- charger ladite procédure de serveur dans ladite RAM pour reconfigurer ainsi dynamiquement ledit système d'exploitation de serveurs sans utiliser ledit mot de passe d'accès d'administrateur ; et
- construire un message de réponse par ledit ordinateur serveur et transmettre ledit message de réponse audit ordinateur client après ladite étape de chargement, ledit message de réponse indiquant que ladite procédure de serveur est chargée dans ladite RAM.

2. Procédé selon la revendication 1, dans lequel l'établissement de la session d'utilisateur (302) au niveau dudit ordinateur client comprend en outre l'étape de chargement d'une application client sur ledit ordinateur client, ladite application client ; exécutant les étapes suivantes exigées pour reconfigurer le système d'exploitation de serveurs selon le procédé de la revendication 1.

3. Procédé selon la revendication 2, comprenant en outre l'étape d'exécution de ladite application client dudit ordinateur client de façon interactive avec ladite procédure de serveur.

4. Procédé selon la revendication 3, comprenant en outre l'étape suivante :
- transmettre des paquets de données entre ledit ordinateur client et ledit ordinateur serveur en utilisant ledit système d'exploitation de serveurs reconfiguré.

5. Procédé selon la revendication 1, dans lequel l'étape de construction d'un premier paquet de messages numériques par ledit ordinateur client comprend l'établissement d'un paquet de messages contenant une en-tête d'un protocole d'échange de paquets de messages sur plusieurs réseaux connectés (IPX) avec lesdits premier et deuxième champs (204, 208).

6. Procédé selon la revendication 1, dans lequel ladite étape de construction d'un premier paquet de messages numériques comprend les étapes suivantes :
- récupérer un paquet de messages numériques partiellement construit d'une table de consultation dans ledit ordinateur client ; et
- manipuler les premier et deuxième champs en fonction des demandes de l'utilisateur reçues dudit matériel d'entrée.

7. Procédé selon la revendication 1, dans lequel ladite procédure de serveur comprend un module de système d'exploitation du réseau.

8. Procédé selon la revendication 1, dans lequel ledit premier champ (204) comprend des indices d'un appel prédéterminé de procédure à distance.

9. Procédé selon la revendication 8, dans lequel ledit appel de procédure à distance (RPC) comprend un appel de procédure à distance pour charger un module de logiciel pouvant être chargé sur un réseau NETWARE (NLM).

10. Procédé selon la revendication 1, dans lequel ledit deuxième champ comprend des indices d'une adresse logique.

11. Procédé selon la revendication 1, dans lequel ledit deuxième champ comprend des index d'un nom de fichier.

12. Procédé selon la revendication 1, dans lequel ladite étape de construction comprend en outre l'addition d'une multiplicité de champs de navigation audit premier paquet de messages numériques en addition auxdits premier et deuxième champs, et dans lequel ladite étape de traitement comprend le dépouillement de ladite multiplicité de champs de telle sorte que ledit système d'exploitation de serveurs traite seulement lesdits premier et deuxième champs.

13. Procédé selon la revendication 1, comprenant en outre les étapes suivantes :
- charger une application client sur ledit ordinateur client et exécuter ladite application client ; et
- accéder, par ladite application client, à ladite procédure de serveur pendant l'exploitation de ladite application client.

14. Système d'ordinateurs client/serveur, comprenant un ordinateur client de réseau (20) configuré pour demander et recevoir des services du réseau en utilisant des paquets de messages numériques (200), ledit ordinateur client comprenant un premier serveur de traitement pour exécuter des programmes d'ordinateur, et un ordinateur serveur de réseau (40) configuré pour recevoir des demandes de services du réseau de la part dudit ordinateur client en utilisant des paquets de messages numériques, l'ordinateur serveur comprenant un deuxième processeur (46) pour exécuter des programmes d'ordinateur, un disque dur (52) pour stocker une multiplicité de modules de logiciels, une RAM (48), et un système d'exploitation de serveurs comprenant un protocole de communication natif résidant dans ledit ordinateur serveur, caractérisé en ce que ledit système d'ordinateurs client/serveur comprend :
- des moyens pour transmettre une application serveur sous la forme d'un module de code exécutable depuis ledit ordinateur client audit ordinateur serveur ;
- des moyens pour stocker ladite application serveur au niveau d'une première adresse sur ledit disque dur dudit ordinateur serveur ;
- des moyens pour transmettre dudit ordinateur serveur audit ordinateur client des indices de ladite première adresse ;
- des moyens pour construire, par ledit ordinateur client, un premier paquet de messages numériques comprenant des indices d'une demande pour charger un module de logiciel et des indices de ladite première adresse ;
- des moyens pour transmettre ledit premier paquet de messages dudit ordinateur client audit ordinateur serveur ;
- des moyens, sensibles audit premier paquet, pour récupérer ladite application serveur de ladite première adresse sur ledit disque dur ; et
- des moyens pour charger ladite application serveur dans ladite RAM pour reconfigurer ainsi dynamiquement ledit système d'exploitation de serveurs depuis ledit ordinateur client.

15. Système d'ordinateur selon la revendication 14, comprenant en outre :
- un clavier (24) configuré pour permettre à un utilisateur d'entrer un unique mot de passe d'accès d'utilisateur dans ledit ordinateur client (20), un premier niveau de sécurité étant associé au mot de passe ;
- un mot de passe d'accès d'administrateur associé audit ordinateur serveur, un deuxième niveau de sécurité étant associé audit mot de passe d'accès d'administrateur ;
- des moyens pour établir une session d'utilisateur au niveau dudit ordinateur client lors de l'entrée dans ledit ordinateur client dudit mot de passe d'accès d'utilisateur ; et
- des moyens pour reconfigurer dynamiquement ledit système d'exploitation de serveurs depuis ledit ordinateur client sans utiliser ledit mot de passe d'accès d'administrateur.

16. Système d'ordinateurs selon la revendication 14, dans lequel ledit ordinateur serveur comprend en outre des moyens pour construire un message de réponse et transmettre ledit message de réponse audit ordinateur client pour indiquer que ladite application serveur est chargée dans ladite RAM.

17. Système d'ordinateurs selon la revendication 14, comprenant en outre des moyens pour transmettre des paquets de données entre ledit ordinateur client et ledit ordinateur serveur en utilisant ledit système d'exploitation de serveur reconfiguré.

18. Système d'ordinateurs selon la revendication 14, dans lequel ladite application serveur comprend un module de système d'exploitation du réseau.

19. Système d'ordinateurs selon la revendication 14, comprenant en outre des moyens pour charger une application client sur ledit ordinateur client et pour exécuter ladite application client de façon interactive avec ladite application serveur.
